(19) Europäisches Patentamt
European Patent Office
Office européen des brevets

(11) EP 1 225 647 B1

(12) **EUROPEAN PATENT SPECIFICATION**

(45) Date of publication and mention of the grant of the patent:
**02.11.2006 Bulletin 2006/44**

(51) Int Cl.:
*H01M 4/62* (2006.01) *H01M 4/36* (2006.01)
*H01M 4/02* (2006.01) *H01M 4/04* (2006.01)
*H01M 4/58* (2006.01) *H01G 9/058* (2006.01)

(21) Application number: **02250300.7**

(22) Date of filing: **16.01.2002**

(54) **Active electrode compositions for secondary lithium batteries and carbonaceous material powder mixture for electrical double-layer capacitors**

Aktive Elektrodenzusammensetzungen für sekundäre Lithiumbatterien und kohlenstoffhaltiges Material für elektrische Doppelschicht-Kondensatoren

Compositions actives d'électrodes pour des batteries secondaires au lithium et mélanges de poudres à base de matériaux carbones pour des condensateurs électriques à double couche

(84) Designated Contracting States:
**DE FR GB**

(30) Priority: **17.01.2001 JP 2001008890**

(43) Date of publication of application:
**24.07.2002 Bulletin 2002/30**

(73) Proprietor: **Nisshinbo Industries, Inc.**
**Chuo-ku,**
**Tokyo (JP)**

(72) Inventors:
- **Sato, Takaya,**
  **c/o Nisshinbo Industries Inc.**
  **Chiba-shi,**
  **Chiba-ken (JP)**
- **Nakata, Hidenori**
  **c/o Nisshinbo Industries Inc.**
  **Chiba-shi,**
  **Chiba-ken (JP)**
- **Yoshida, Hiroshi,**
  **c/o Nisshinbo Industries Inc.**
  **Chiba-shi,**
  **Chiba-ken (JP)**
- **Maruo, Tatsuya,**
  **c/o Nisshinbo Industries Inc.**
  **Chiba-shi,**
  **Chiba-ken (JP)**
- **Minamiru, Shigenori,**
  **c/o Nisshinbo Industries Inc.**
  **Chiba-shi,**
  **Chiba-ken (JP)**

(74) Representative: **Stuart, Ian Alexander et al**
**Mewburn Ellis LLP**
**York House**
**23 Kingsway**
**London WC2B 6HP (GB)**

(56) References cited:
**EP-A- 0 814 521**
**EP-A- 0 933 791**
**EP-A- 0 938 147**
**EP-A- 0 973 180**
**EP-A- 0 977 219**
**EP-A- 1 020 944**
**EP-A- 1 049 116**
**EP-A- 1 195 827**
**WO-A-00/57440**
**US-A- 4 737 889**
**US-A- 5 172 307**

- **PATENT ABSTRACTS OF JAPAN vol. 2000, no. 07, 29 September 2000 (2000-09-29) & JP 2000 123879 A (SONY CORP), 28 April 2000 (2000-04-28)**
- **PATENT ABSTRACTS OF JAPAN vol. 1998, no. 14, 31 December 1998 (1998-12-31) & JP 10 237564 A (SANYO ELECTRIC CO LTD), 8 September 1998 (1998-09-08)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 225 647 B1

Printed by Jouve, 75001 PARIS (FR)

## Description

The invention relates to carbonaceous materials for electrical double-layer capacitors, polarizable electrode compositions, polarizable electrodes, and electrical double-layer capacitors.

Electrical conductivity problems are encountered in polarizable electrodes for electrical double-layer capacitors. Mere admixture of a conductive powder tends to be ineffectual because of poor surface-to-surface contact. An urgent need has thus been felt for a solution to these difficulties.

These problems are solved by the subject-matter of claims 1, 5, 11, 12, 13, and 15.

EMBODIMENTS OF THE INVENTION

Embodiments of the invention provide carbonaceous materials for electrical double-layer capacitors, polarizable electrode compositions, and polarizable electrodes that make it possible to obtain electrical double-layer capacitors through which a larger amount of current can flow at one time and that have an enhanced power density, and also to provide high-performance electrical double-layer capacitors assembled therefrom.

We have conducted extensive studies aimed at creating an orderly mixed state when a conductive powder is dry-mixed with a carbonaceous material for electrical double-layer capacitors. Our investigations have shown that when a conductive powder and a carbonaceous material for electrical double-layer capacitors are placed in a mixing container and dry mixture is carried out using a planetary mixer that subjects the mixing container to both rotation and revolution, triboelectrification between the particles being mixed causes the hitherto agglomerated conductive powder to disperse into primary particles which then attach to the periphery of the battery active material or carbonaceous material for electrical double-layer capacitors having a large average particle size.

We have also found that the use of a conductive powder having an average particle size of 10 nm to 10 μm in combination with a carbonaceous material for electrical double-layer capacitors having an average particle size which is larger than that of the conductive powder and within a range of 0.1 to 100 μm causes the relative motion of the particles to change from a volume effect proportional to the cube of the particle size to a surface area effect proportional to the square of the particle size. This allows electrostatic forces to exert a larger influence, making it easier to create the orderly mixed state of an adhesive powder.

Through further investigations based on the above findings, we have also discovered that carrying out dry mixture with a mixer that applies both rotation and revolution to the components makes it possible to achieve an orderly mixed state in which the conductive substance having an average particle size of 10 nm to 10 μm adheres to the periphery of the carbonaceous material for electrical double-layer capacitors. In this way, there can be obtained a powder mixture for electrical double-layer capacitors in which the contact surface area between the conductive substance and the carbonaceous material for electrical double-layer capacitors has been increased without increasing the amount of conductive substance, and which has a high electron conductivity. The resulting powder mixture for electrical double-layer capacitors can be used to produce polarizable electrodes and electrical double-layer capacitors, of excellent performance.

In a first aspect, the invention provides a carbonaceous material powder mixture for electrical double-layer capacitors, which powder mixture is composed of a carbonaceous material for electrical double-layer capacitors having an average particle size of 0.1 to 100 μm and an electrically conductive powder which adheres to the periphery of the carbonaceous material. The conductive powder has an average particle size that is 10 nm to 10 μm, and is smaller than the average particle size of the carbonaceous material. The mixture is prepared by placing a carbonaceous material for electrical double-layer capacitors and an electrically conductive powder in a mixing container, then rotating and revolving the container so as to effect dry mixture. The powder mixture is typically composed of 0.1 to 20 parts by weight of the conductive powder per 100 parts by weight of the carbonaceous material.

The carbonaceous material generally has a packing density of not more than 1.0 $g/cm^3$. It is typically prepared by subjecting a mesophase pitch-based carbon material, a polyacrylonitrile-based carbon material, a gas phase-grown carbon material, a rayon-based carbon material or a pitch-based carbon material to alkali activation with an alkali metal compound, then grinding the activated carbon material.

In a second aspect, the invention provides a polarizable electrode composition prepared by wet mixing the above-described powder mixture with a binder polymer in a mixing container subjected to both rotation and revolution.

In one preferred embodiment of the polarizable electrode composition according to the second aspect of the invention, the binder polymer is an unsaturated polyurethane compound prepared by reacting:

(A) an unsaturated alcohol having at least one (meth)acryloyl group and a hydroxyl group on the molecule;
(B) a polyol compound of general formula (1) below

$$HO\text{-}[(R^1)_h\text{-}(Y)_i\text{-}(R^2)_j]_q\text{-}OH \qquad (1)$$

wherein $R^1$ and $R^2$ are each independently a divalent hydrocarbon group of 1 to 10 carbons which may contain an amino, nitro, carbonyl or ether group,
Y is -COO-, -OCOO-, $-NR^3CO-$ ($R^3$ being hydrogen or an alkyl group of 1 to 4 carbons), -O- or an arylene group,
the letters h, i and j are each independently 0 or an integer from 1 to 10, and
the letter q is an integer which is ≥1;

(C) a polyisocyanate compound; and
(D) an optional chain extender.

In another preferred embodiment of the polarizable electrode composition according to the second aspect of the invention, the binder polymer is a polymeric material having an interpenetrating network structure or a semi-interpenetrating network structure, and especially one composed of a hydroxyalkyl polysaccharide derivative, a polyvinyl alcohol derivative or a polyglycidol derivative in combination with a crosslinkable functional group-bearing compound, part or all of which compound is the unsaturated polyurethane compound described above.
In yet another preferred embodiment, the binder polymer is a thermoplastic resin containing units of general formula (2) below

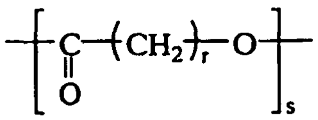

(2)

in which the letter r is 3, 4 or 5, and the letter s is an integer ≥5.
In still another preferred embodiment, the binder polymer is a fluoropolymer material.
In a third aspect, the invention provides a polarizable electrode for electrical double-layer capacitors, which electrode is composed of a current collector coated with a polarizable electrode composition according to the above-described second aspect of the invention.
In a fourth aspect, the invention provides an electrical double-layer capacitor composed in part of a polarizable electrode according to the foregoing third aspect of the invention and an electrolyte.

## BRIEF DESCRIPTION OF THE DRAWINGS

The objects, features and advantages of the invention will become more apparent from the following detailed description, taken in conjunction with the accompanying drawings.

FIG. 1 is a scanning electron micrograph of the carbonaceous material powder mixture prepared in Example 6.
FIG. 2 is a scanning electron micrograph of the carbonaceous material powder mixture prepared in Comparative Example 1.
FIG. 3 is a sectional view of a laminate-type electrical double-layer capacitor according to one embodiment of the invention.

## DETAILED DESCRIPTION OF EMBODIMENTS

The carbonaceous material powder mixtures for electrical double-layer capacitors of the invention are composed of a carbonaceous material for electrical double-layer capacitors having an average particle size of 0.1 to 100 μm, and an electrically conductive powder which adheres to the periphery of the active material or the carbonaceous material and which has an average particle size that is 10 nm to 10 μm and smaller than the average particle size of the battery active material or the carbonaceous material.
This can be readily understood by comparing the image in FIG. 1 of a carbonaceous material powder mixture for electrical double-layer capacitors according to the present invention with the image in FIG. 2 of a conventional powder mixture. That is, in a powder mixture according to the invention which has been prepared by adding together a carbon material (activated carbon fibers) for electrical double-layer capacitors and an electrically conductive powder (Ketjen black), and dry mixing the components in a planetary mixer (Example 6), it is evident from FIG. 1 that the Ketjen black adheres to the periphery of the activated carbon fibers and that an orderly mixed state has been achieved. By contrast, it is evident from FIG. 2, which is a scanning electron micrograph of a conventional powder mixture (Comparative Example

1) that has been dry-mixed in a similar fashion but with a commonly used propeller-type stirrer instead of a planetary mixer, that agglomerated Ketjen black adheres between the fibers of activated carbon. Polarizable electrodes manufactured from the latter powder mixture have a higher impedance than those manufactured using the powder mixture prepared in the example according to the present invention.

Such a powder mixture can be prepared by placing a carbonaceous material for electrical double-layer capacitors together with an electrically conductive powder in a mixing container, and dry-mixing the components by having the container itself both rotate and revolve.

There are three conceivable models for the mixed state that results when two or more solid powders are dry mixed: segregation, disordered mixing, and ordered mixing. It was once thought that an orderly mixed state could not be practically achieved on account of such factors as agglomeration of the particles being mixed, differences in size between the particles, and electrostatic buildup. However, a mixed state was found in which, due to the frictionally induced buildup of static charge, or triboelectrification, between particles during mixing, fine particles that have a tendency to agglomerate adhere to the surface of coarse particles of excipient in pharmaceutical preparations (D.N. Travers and R.C. White: *J. Pharm. Pharmacol.* 23, 260 (1971)). This suggested that it might be possible to achieve the orderly mixed state of an adhesive powder.

Specifically, in the context of the present invention, a carbonaceous material for electrical double-layer capacitors and an electrically conductive powder are placed in a mixing container mounted in a planetary mixer so as to be separately rotatable about a central axis of rotation by a rotational mechanism. The planetary mixer then carries out dry mixture by having the rotational mechanism operate and by also having the central axis of rotation revolve in an orbit so as to subject the mixing container to both rotation and revolution. Such mixture induces triboelectrification between the particles being mixed, thereby dispersing the agglomerated conductive powder into primary particles which adhere to the periphery of the battery active material or the carbonaceous material for electrical double-layer capacitors having a large average particle size. Moreover, by giving the battery active material or the carbonaceous material for electrical double-layer capacitors an average particle size of 100 $\mu$m or less, the relative motion of the particles changes from a volumetric effect proportional to the cube of the particle size to a surface area effect proportional to the square of the particle size. This allows electrostatic forces to exert a larger influence, making it easier to create the orderly mixed state of an adhesive powder. "Adhesive powder," as used herein, refers to a binary powder in which particles of one type of powder adhere to particles of the other type of powder.

Because the carbonaceous material powder mixture for electrical double-layer capacitors of the invention assume the orderly mixed state of an adhesive powder in which particles of a conductive powder adhere to the periphery of particles of a carbonaceous material, the addition of a small amount of the conductive powder results in effective dispersion and adhesion. A high electron conductivity can thus be imparted without lowering the amount of carbonaceous material per unit volume of the electrode, enabling the ideal formation of an electron conduction pathway.

The mixing method used in the practice of the invention forms a gum or paste-like mixture by carrying out a step in which the adhesive powder is created by dry-mixing the carbonaceous material for electrical double-layer capacitors with the electrically conductive powder, and a step in which a binder polymer and, optionally, a solvent, are added and worked into the resulting carbonaceous powder mixture for electrical double-layer capacitors. It is preferable to carry out both steps by using the above-described planetary mixer to rotate and revolve the mixing container and thus effect mixture and blending. The mixing method of the invention is especially desirable in cases where a carbonaceous material for electrical double-layer capacitors, which has a low packing density (bulk density), is mixed with an electrically conductive powder. An adhesive powder state is difficult to create by a conventional stirring and mixing process.

In the first step (adhesive powder formation), predetermined amounts of the carbonaceous material for electrical double-layer capacitors and the electrically conductive powder are placed in the mixing container, and mixing is carried out until it can be confirmed by scanning electron microscopy that a homogeneous adhesive powder free of agglomerated particles has formed. The criterion in this case is to find absolutely no agglomerated particles of conductive powder which are larger than the carbonaceous material for electrical double-layer capacitors when the powder mixture is immobilized on a substrate such as both-sided tape and a 1 $cm^2$ surface area is examined under a scanning electron microscope at a magnification of 500x.

In the second step (blending with a binder polymer), a predetermined amount of a binder polymer and, optionally, a solvent are poured into the carbonaceous material powder mixture for electrical double-layer capacitors prepared in the first step, and blending is carried out until a uniform gum or paste is obtained. Use of the above-described planetary mixer in this step is advantageous because of the need to carry out blending and defoaming in a short period of time and also to minimize the amount of solvent addition if a solvent is added.

Examples of solvents that may be used include polar solvents such as water, N-methyl-2-pyrrolidone (NMP), dimethylformamide, dimethylacetamide, dimethylsulfamide and tetrahydrofuran.

The planetary mixer is not subject to any particular limitation, so long as the mixing container in which the components to be mixed are placed can be rotated and revolved. For example, use can be made of the Mazerustar KK series manufactured by Kurabo Industries, Ltd. or the Supermixer AR-250 manufactured by Thinky Co., Ltd. The mixing

conditions include revolution such as to produce a centrifugal force (in g's), as calculated from the number of revolutions per minute and the radius of revolution, of 30g to 500g, and preferably 100g to 200g, accompanied by rotation at a speed of 50 to 3,000 rpm, and preferably 100 to 1,500 rpm. It is advantageous to carry out such rotational mixing intermittently with standing and cooling, and to set the mixing time per cycle within a range of 10 seconds to 10 minutes, and preferably 1 to 5 minutes, depending on the amount of heat generated by rotational mixing.

In the practice of the invention, the mixing container containing the components to be mixed must itself be subjected to rotation and revolution. The objects of the invention cannot be achieved merely by stirring and mixing the components within the mixing container with a stirrer that rotates and revolves.

The carbonaceous material for electrical double-layer capacitors has an average particle size of preferably 0.1 to 100 μm, more preferably 0.1 to 60 μm, and most preferably 0.1 to 50 μm. Illustrative examples include plant-based materials such as wood, sawdust, coconut shells and pulp spent liquor; fossil fuel-based materials such as coal and petroleum fuel oil, as well as fibers spun from coal or petroleum pitch obtained by the thermal cracking of such fossil fuel-based materials or from tar pitch; and synthetic polymers, phenolic resins, furan resins, polyvinyl chloride resins, polyvinylidene chloride resins, polyimide resins, polyamide resins, liquid-crystal polymers, plastic waste and reclaimed tire rubber. These starting materials may be carbonized then activated to form activated carbon. Of the above, an activated carbon obtained by carbonizing phenolic resin and steam activating it at a temperature of 800 to 1000°C. The activated carbon preferably has a mean particle size of about 0.1 to 100 μm and a specific surface area of about 500 to 3500 $m^2/g$, although not limited thereto. From the viewpoint of improving the capacity of an electrode prepared by using the activated carbon, the mean particle size is more preferably 1 to 60 μm and most preferably 3 to 50 μm, and the specific surface area is more preferably 1000 to 3500 $m^2/g$ and most preferably 1500 to 3500 $m^2/g$.

Furthermore, an activated carbon in the form of a finely divided powder prepared by subjecting a mesophase pitch-based carbon material, a polyacrylonitrile-based carbon material, a gas phase-grown carbon material, a rayon-based carbon material or a pitch-based carbon material to alkali activation with an alkali metal compound, then grinding, is preferred. It is especially preferable to use as the fibrous carbonaceous material a mesophase pitch carbon material, a polyacrylonitrile-based carbon material, a gas phase-grown carbon material, a rayon-based carbon material or a pitch-based carbon material.

The use of an activated carbon having a pore size distribution, as determined from a nitrogen adsorption isotherm, in which pores with a radius of up to 10 Å (1nm) account for at most 70% of the total pore volume makes it possible to obtain activated carbon with an optimal pore size distribution when a nonaqueous electrolyte solution, and especially an organic electrolyte solution, is used. The organic electrolyte solution penetrates fully to the interior of the pores, allowing cations or anions to adsorb efficiently to the surface of the activated carbon and form an electrical double layer, thus making it possible to store a high level of electrical energy.

The pore size distribution of the activated carbon, as determined from a nitrogen adsorption isotherm, is measured by the continuous flow method using nitrogen gas after vacuum outgassing the activated carbon sample. The volume (cc/g) of pores having a radius larger than 10 Å (1 nm) is computed from a desorption isotherm obtained by BJH pore size analysis from a pore distribution plot. The volume (cc/g) of pores with a radius up to 10 Å (1 nm) is computed from an adsorption isotherm obtained by the MP procedure from an MP plot.

In the activated carbon, the volume of pores having a radius up to 10 Å (1 nm) as determined from a nitrogen adsorption isotherm, accounts for at most 70%, preferably up to 50%, more preferably up to 30%, and most preferably from 0 to 30%, of the total pore volume. If the volume of pores having a radius of up to 10 Å (1 nm) is too great, the overall pore volume of the activated carbon becomes too large and the electrostatic capacitance per unit volume too small.

The most common pore radius in the pore size distribution of the activated carbon, as determined from a nitrogen adsorption isotherm, is preferably 15 to 500 Å (1.5-50 nm) more preferably 20 to 200 Å (2-20 nm) and most preferably 50 to 120 Å (5-12 nm). Moreover, in the activated carbon, preferably at least 50%, more preferably at least 60%, even more preferably at least 70%, and most preferably at least 80%, of the pores with a radius greater than 10 Å (1 nm) have a pore radius within a range of 20 to 400 Å (20-40 nm). The proportion of pores with a radius greater than 10 Å (1 nm) which have a radius within a range of 20 to 400 Å (2-40 nm) may even be 100%.

In addition to satisfying the foregoing pore radius conditions, it is advantageous for the activated carbon to have a specific surface area, as measured by the nitrogen adsorption BET method, of 1 to 3500 $m^2/g$, preferably 5 to 3500 $m^2/g$. If the specific surface area of the activated carbon is too small, the surface area of the activated carbon on which the electrical double layer forms becomes smaller than desirable, resulting in a low capacitance. On the other hand, if the specific surface area is too large, the number of micropores and sub-micropores in the activated carbon which are unable to adsorb ionic molecules increases and the electrode density decreases, likewise resulting in a lower capacitance.

The carbonaceous material for electrical double-layer capacitors desirably has a packing density, as measured according to JIS-K1417 (Test Methods for Activated Carbon), of at most 1.0 $g/cm^3$, and preferably 0.4 to 1.0 $g/cm^3$.

No limitation is imposed on the conductive powder, so long as it can impart electrical conductivity to the carbonaceous material for electrical double-layer capacitors of the invention. Illustrative examples include carbon black,

Ketjen black, acetylene black, carbon whiskers, carbon fibers, natural graphite, synthetic graphite, titanium oxide, ruthenium oxide, and metallic fibers such as aluminum and nickel. Any one or combinations of two or more of the above may be used. The use of Ketjen black, which is a type of carbon black, or acetylene black is preferred. The conductive powder has an average particle size of 10 nm to 10 μm, preferably 10 nm to 100 nm, and most preferably 20 nm to 40 nm. It is advantageous for the conductive powder to have an average particle size within a range of 1/5000 to 1/2, and especially 1/1000 to 1/10, the average particle size of the carbonaceous material for electrical double-layer capacitors.

In the practice of the invention, it is advantageous to add 0.1 to 20 parts by weight, and preferably 0.5 to 10 parts by weight, of the conductive powder per 100 parts by weight of the carbonaceous material for electrical double-layer capacitors.

The polarizable electrode composition of the invention is prepared by placing the carbonaceous material powder mixture for electrical double-layer capacitors which has been obtained as described above, together with a liquid binder or a binder prepared in the form of a solution and, if necessary, a solvent, in a mixing container and wet-mixing the components by rotating and revolving the mixing container. The resulting polarizable electrode composition has added thereto the minimum amount of solvent required to form a slurry of a viscosity suitable for coating. The polarizable electrode composition slurry thus obtained has a preferred viscosity which varies somewhat depending on the coating method, but is generally within a range of 1,000 to 20,000 mPa·s, and especially 2,000 to 10,000 mPa·s, at a slurry temperature of 30°C. The binder polymer is added in an amount of 0.5 to 20 parts by weight, and especially 1 to 10 parts by weight, per 100 parts by weight of the mixed powder.

Examples of binder polymers that may be used in the invention include (I) unsaturated polyurethane compounds, (II) polymeric materials having an interpenetrating network structure or a semi-interpenetrating network structure, (III) thermoplastic resins containing units of the following general formula (2), and (IV) fluoropolymer materials.

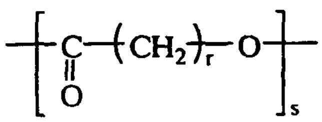

(2)

in which the letter r is 3, 4 or 5, and the letter s is an integer ≥5.

The use of one of polymeric materials (I) to (III) as the binder polymer results in a high adhesion, and can therefore increase the physical strength of the electrode. Polymeric materials having an interpenetrating network structure or a semi-interpenetrating network structure (II) are characterized by a high affinity between the electrolyte solvent molecules and the ionic molecules, a high ion mobility, the ability to dissolve the electrolyte salt to a high concentration, and a high ionic conductivity. Thermoplastic resins (III) which contain units of general formula (2) are thermoplastic and thus can be easily shaped, suitably absorb organic electrolyte solutions and swell, and have a high ionic conductivity. Fluoropolymer materials (IV) have excellent thermal and electrical stability.

The above-described unsaturated polyurethane compounds (I) are preferably ones prepared by reacting:

(A) an unsaturated alcohol having at least one (meth)acryloyl group and a hydroxyl group on the molecule;

(B) a polyol compound of general formula (1) below

$$HO\text{-}[(R^1)_h\text{-}(Y)_i\text{-}(R^2)_j]_q\text{-}OH \qquad (1)$$

wherein $R^1$ and $R^2$ are each independently a divalent hydrocarbon group of 1 to 10 carbons which may contain an amino, nitro, carbonyl or ether group,
Y is -COO-, -OCOO-, -$NR^3$CO- ($R^3$ being a hydrogen atom or an alkyl group of 1 to 4 carbons), -O- or an arylene group,
the letters h, i and j are each independently 0 or an integer from 1 to 10, and
the letter q is an integer which is ≥1;

(C) a polyisocyanate compound; and

(D) an optional chain extender.

The unsaturated alcohol serving as component (A) is not subject to any particular limitation, provided the molecule bears at least one (meth)acryloyl group and a hydroxyl group. Illustrative examples include 2-hydroxyethyl

acrylate, 2-hydroxypropyl acrylate, 2-hydroxyethyl methacrylate, 2-hydroxylpropyl methacrylate, diethylene glycol monoacrylate, diethylene glycol monomethacrylate, triethylene glycol monoacrylate and triethylene glycol monomethacrylate.

The polyol compound serving as component (B) may be, for example, a polyether polyol such as polyethylene glycol, polypropylene glycol, polyoxytetramethylene glycol, ethylene glycol-propylene glycol copolymer or ethylene glycol-oxytetramethylene glycol copolymer; or a polyester polyol such as polycaprolactone. A polyol compound of general formula (1) below is especially preferred:

$$HO\text{-}[(R^1)_h\text{-}(Y)_i\text{-}(R^2)_j]_q\text{-}OH \qquad (1).$$

In the foregoing formula, $R^1$ and $R^2$ are each independently a divalent hydrocarbon group of 1 to 10 carbons, and preferably 1 to 6 carbons, which may contain an amino, nitro, carbonyl or ether group. Alkylene groups such as methylene, ethylene, trimethylene, propylene, ethylene oxide and propylene oxide are especially preferred. Y is -COO-, -OCOO-, $-NR^3CO-$ ($R^3$ being a hydrogen atom or an alkyl group of 1 to 4 carbons), -O- or an arylene group such as phenylene. The letters h, i and j are each independently 0 or an integer from 1 to 10. The letter q is a number which is ≥1, preferably ≥5, and most preferably from 10 to 200.

The polyol compound serving as component (B) has a number-average molecular weight of preferably 400 to 10,000, and more preferably 1,000 to 5,000.

Illustrative examples of the polyisocyanate compound serving as component (C) include aromatic diisocyanates such as tolylene diisocyanate, 4,4'-diphenylmethane diisocyanate, p-phenylene diisocyanate, 1,5-naphthylene diisocyanate, 3,3'-dichloro-4,4'-diphenylmethane diisocyanate and xylylene diisocyanate; and aliphatic or alicyclic diisocyanates such as hexamethylene diisocyanate, isophorone diisocyanate, 4,4'-dichlorohexylmethane diisocyanate and hydrogenated xylylene diisocyanate.

The unsaturated polyurethane compound in the invention is preferably one prepared from above components (A) to (C) and also, if necessary, a chain extender. Any chain extender commonly employed in the preparation of thermoplastic polyurethane resins may be used. Illustrative examples include aliphatic diols such as ethylene glycol, diethylene glycol, propylene glycol, 1,3-propanediol, 1,4-butanediol, 1,5-pentanediol, 1,6-hexanediol, 1,7-heptanediol, 1,8-octanediol and 1,9-nonanediol; aromatic or alicyclic diols such as 1,4-bis(β-hydroxyethoxy)benzene, 1,4-cyclohexanediol, bis(β-hydroxyethyl) terephthalate and xylylene glycol; diamines such as hydrazine, ethylenediamine, hexamethylenediamine, propylenediamine, xylylenediamine, isophoronediamine, piperazine, piperazine derivatives, phenylenediamine and tolylenediamine; and amino alcohols such as adipoyl hydrazide and isophthaloyl hydrazide. Any one or combinations of two or more of these may be used.

Use may also be made of a urethane prepolymer prepared by the preliminary reaction of the polyol compound serving as component (B) with the polyisocyanate compound serving as component (C).

In preparing an unsaturated polyurethane compound for use in the invention, it is advantageous to react above components (A) to (D) in the following proportions:

(A) 100 parts by weight of the unsaturated alcohol;
(B) 100 to 20,000 parts by weight, and preferably 1,000 to 10,000 parts by weight, of the polyol compound;
(C) 80 to 5,000 parts by weight, and preferably 300 to 2,000 parts by weight, of the polyisocyanate compound; and, optionally,
(D) 5 to 1,000 parts by weight, and preferably 10 to 500 parts by weight, of the chain extender.

Examples of unsaturated polyurethane compounds that can be prepared as described above include the following compounds. Any one or combinations of two or more of these compounds may be used in the invention.

(1) $CH_2{=}C(CH_3)COO\text{-}C_2H_4O\text{-}CONH\text{-}C_6H_4\text{-}CH_2C_6H_4\text{-}NHCOO\text{-}[(C_2H_4O)_h\ (CH_2CH\text{-}(CH_3)O)_j]_q\text{-}CONH\text{-}C_6H_4\text{-}CH_2\text{-}C_6H_4\text{-}NHCOO\text{-}C_2H_4O\text{-}COC(CH_3){=}CH_2$
(wherein h is 7, j is 3, and q is 5 to 7)

Component (A): hydroxyethyl methacrylate
Component (B): ethylene oxide/propylene oxide random copolymer diol (in the above, the ratio h/j is 7/3; the number-average molecular weight is about 3,000)
Component (C): 4,4'-diphenylmethane diisocyanate

(2) $CH_2{=}C(CH_3)COO\text{-}C_2H_4O\text{-}CONH\text{-}C_6H_4\text{-}CH_2C_6H_4\text{-}NHCOO\text{-}\{[(C_2H_4O)_h(CH_2CH\text{-}(CH_3)O)_j]_q\text{-}CONH\text{-}C_6H_4\text{-}CH_2\text{-}C_6H_4\text{-}NHCOO\text{-}C_4H_8O)_r\text{-}CONH\text{-}C_6H_4\text{-}CH_2C_6H_4\text{-}NHCOO\text{-}C_2H_4O\text{-}COC(CH_3){=}CH_2$
(wherein h is 7, j is 3, q is 5 to 7, and r is 2 to 20)

Component (A): hydroxyethyl methacrylate
Component (B): ethylene oxide/propylene oxide random copolymer diol (in the above, the ratio h/j is 7/3; the number-average molecular weight is about 3,000)
Component (C): 4,4'-diphenylmethane diisocyanate
Component (D): 1,4-butanediol

(3) $CH_2=C(CH_3)COO-C_2H_4O-CONH-C_6H_7(CH_3)_3-CH_2-NHCOO-[(C_2H_4O)_h(CH_2-CH(CH_3)O)_j]_q-CONH-C_6H_7(CH_3)_3-CH_2-NHCOO-C_2H_4O-COC(CH_3)=CH_2$
(wherein h is 7, j is 3, and q is 5 to 7)

Component (A): hydroxyethyl methacrylate
Component (B): ethylene oxide/propylene oxide random copolymer diol (in the above, the ratio h/j is 7/3; the number-average molecular weight is about 3,000)
Component (C): isophorone diisocyanate

(4) $CH_2=C(CH_3)COO-C_2H_4O-CONH-C_6H_4-CH_2C_6H_4-NHCOO-CH_2CH_2O-(COC_5H_{10}-O)_s-CH_2CH_2O-CONH-C_6H_4-CH_2C_6H_4-NHCOO-C_2H_4O-COC(CH_3)=CH_2$
(wherein s is 20 to 30)

Component (A): hydroxyethyl methacrylate
Component (B): polycaprolactone diol (number-average molecular weight, about 3,000)
Component (C): 4,4'-diphenylmethane diisocyanate

The resulting unsaturated polyurethane compound has a number-average molecular weight of preferably 1,000 to 50,000, and most preferably 3,000 to 30,000. Too small a number-average molecular weight results in the cured polymer having a small molecular weight between crosslink sites, which may give it insufficient flexibility as a binder polymer. On the other hand, a number-average molecular weight that is too large may cause the viscosity of the electrode composition prior to curing to become so large as to make it difficult to fabricate an electrode having a uniform coat thickness.

In the practice of the invention, concomitant use may also be made of a monomer which is copolymerizable with the unsaturated polyurethane compound. Examples of such monomers include acrylonitrile, methacrylonitrile, acrylic acid esters, methacrylic acid esters and N-vinylpyrrolidone. The concomitant use of acrylonitrile or methacrylonitrile is advantageous for increasing the strength of the electrode coat without compromising the ionic conductivity.

The above-mentioned polymeric material having an interpenetrating network structure or semi-interpenetrating network structure (II) may be composed of two or more compounds, such as polymers or reactive monomers, that are capable of forming a mutually interpenetrating or semi-interpenetrating network structure.

Examples of such polymeric materials and the two or more compounds of which they are composed include:

(A) binder polymers formed by combining (a) a hydroxyalkyl polysaccharide derivative with (d) a crosslinkable functional group-bearing compound;
(B) binder polymers formed by combining (b) a polyvinyl alcohol derivative with (d) a crosslinkable functional group-bearing compound; and
(C) binder polymers formed by combining (c) a polyglycidol derivative with (d) a crosslinkable functional group-bearing compound. Use of the above-described unsaturated polyurethane compound (I) of the invention as part or all of the crosslinkable functional group-bearing compound (d) is advantageous for improving physical strength and other reasons.

Any of the following may be used as the hydroxyalkyl polysaccharide derivative serving as component (a) of above binder polymer A:

(1) hydroxyethyl polysaccharides prepared by reacting ethylene oxide with a naturally occurring polysaccharide such as cellulose or starch,
(2) hydroxypropyl polysaccharides prepared by similarly reacting instead propylene oxide,
(3) dihydroxypropyl polysaccharides prepared by similarly reacting instead glycidol or 3-chloro-1,2-propanediol.

Some or all of the hydroxyl groups on these hydroxyalkyl polysaccharides may be capped with an ester-bonded or ether-bonded substituent.

Illustrative examples of such polysaccharides include cellulose, starch, amylose, amylopectin, pullulan, curdlan,

mannan, glucomannan, arabinan, chitin, chitosan, alginic acid, carrageenan and dextran. The polysaccharide is not subject to any particular limitations with regard to molecular weight, the presence or absence of a branched structure, the type and arrangement of constituent sugars in the polysaccharide and other characteristics. The use of cellulose and pullulan is especially preferred, in part because of their ready availability.

A method for synthesizing dihydroxypropyl cellulose is described in U.S. Pat. No. 4,096,326. Other dihydroxypropyl polysaccharides can be synthesized by known methods, such as those described by Sato et al**,** in *Makromol. Chem.* **193**, p. 647 (1992) or in *Macromolecules* **24**, p. 4691 (1991).

Hydroxyalkyl polysaccharides that may be used in the invention have a molar degree of substitution of preferably at least 2. At a molar substitution below 2, the ability to dissolve ion-conductive metal salts becomes so low as to make use of the hydroxyalkyl polysaccharide impossible. The upper limit in the molar substitution is preferably 30, and more preferably 20. The industrial synthesis of hydroxyalkyl polysaccharides having a molar substitution greater than 30 can be difficult on account of industrial production costs and the complexity of the synthesis operations. Moreover, even if one does go to the extra trouble of producing hydroxyalkyl polysaccharides having a molar substitution greater than 30, the increase in electrical conductivity resulting from the higher molar substitution is not likely to be very large.

The hydroxyalkyl polysaccharide derivative used as component (a) in the practice of the invention is one in which at least 10% of the terminal OH groups on the molecular chains of the above-described hydroxyalkyl polysaccharide have been capped with one or more monovalent group selected from among halogen atoms, substituted or unsubstituted monovalent hydrocarbon groups, $R^{15}CO$- groups (wherein $R^{15}$ is a substituted or unsubstituted monovalent hydrocarbon group). $R^{15}{}_3Si$- groups (wherein $R^{15}$ is the same as above), amino groups, alkylamino groups, $H(OR^{16})_m$- groups (wherein $R^{16}$ is an alkylene group of 2 to 5 carbons, and the letter m is an integer from 1 to 100), and phosphorus-containing groups.

The above substituted or unsubstituted monovalent hydrocarbon groups are exemplified by the same groups as those mentioned above for $R^1$ and $R^2$, and preferably have 1 to 10 carbons.

The terminal OH groups may be capped using any known method for introducing the respective groups.

In the polyvinyl alcohol derivative serving as component (b) of above binder polymer B, some or all of the hydroxyl groups on the polymeric compound having oxyalkylene chain-bearing polyvinyl alcohol units may be substituted. Here, "hydroxyl groups" refers collectively to remaining hydroxyl groups from the polyvinyl alcohol units and hydroxyl groups on the oxyalkylene-containing groups that have been introduced onto the molecule.

The polymeric compound having polyvinyl alcohol units has an average degree of polymerization of at least 20, preferably at least 30, and most preferably at least 50. Some or all of the hydroxyl groups on the polyvinyl alcohol units are substituted with oxyalkylene-containing groups. The upper limit in the average degree of polymerization is preferably no higher than 2.000, and most preferably no higher than 200. The average degree of polymerization refers herein to the number-average degree of polymerization. Polymeric compounds with too high a degree of polymerization have an excessively high viscosity, making them difficult to handle. Accordingly, the range in the degree of polymerization is preferably from 20 to 500 monomeric units.

These polyvinyl alcohol units make up the backbone of the polyvinyl alcohol derivative and have the following general formula (3).

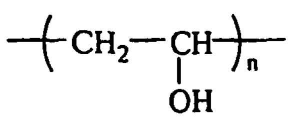

(3)

In formula (3), the letter n is at least 20, preferably at least 30, and most preferably at least 50. The upper limit for n is preferably no higher than 2,000, and most preferably no higher than 200.

It is highly advantageous for the polyvinyl alcohol unit-containing polymeric compound to be a homopolymer which satisfies the above range in the average degree of polymerization and in which the fraction of polyvinyl alcohol units within the molecule is at least 98 mol%. However, use can also be made of, without particular limitation, polyvinyl alcohol unit-containing polymeric compounds which satisfy the above range in the average degree of polymerization and have a polyvinyl alcohol fraction of preferably at least 60 mol%, and more preferably at least 70 mol%. Illustrative examples include polyvinylformal in which some of the hydroxyl groups on the polyvinyl alcohol have been converted to formal, modified polyvinyl alcohols in which some of the hydroxyl groups on the polyvinyl alcohol have been alkylated, poly(ethylene vinyl alcohol), partially saponified polyvinyl acetate, and other modified polyvinyl alcohols.

Some or all of the hydroxyl groups on the polyvinyl alcohol units of the polymeric compound are substituted with oxyalkylene-containing groups (moreover, some of the hydrogen atoms on these oxyalkylene groups may be substituted with hydroxyl groups) to an average molar substitution of at least 0.3. The proportion of hydroxyl groups substituted

with oxyalkylene-containing groups is preferably at least 30 mol%, and more preferably at least 50 mol%.

The average molar substitution (MS) can be determined by accurately measuring the weight of the polyvinyl alcohol charged and the weight of the reaction product. Let us consider, for example, a case in which 10 g of polyvinyl alcohol (PVA) is reacted with ethylene oxide, and the weight of the resulting PVA derivative is 15 g. The PVA units have the formula $-(CH_2CH(OH))-$, and so their unit molecular weight is 44. In the PVA derivative obtained as the reaction product, the -OH groups on the original $-(CH_2CH(OH))-$ units have become $-O-(CH_2CH_2O)_n-H$ groups, and so the unit molecular weight of the reaction product is 44+44n. The increase in weight associated with the reaction is represented by 44n. Hence, the calculation is carried out as follows.

$$\frac{\text{PVA}}{\text{PVA derivative}} = \frac{44}{44 + 44n} = \frac{10\text{ g}}{15\text{ g}}$$

$$440 + 440n = 660$$

$$n = 0.5$$

The molar substitution in this example is thus 0.5. Of course, this value merely represents the average molar substitution and does not give any indication of, for example, the number of unreacted PVA units on the molecule or the length of the oxyethylene groups introduced onto the PVA by the reaction.

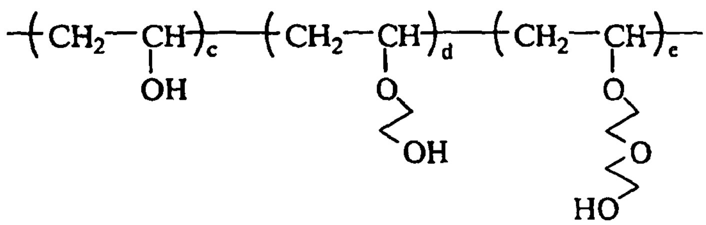

$c + d + e = 1$

MS = 0 unit MS = 1 unit MS = 2 units

$$\text{Average MS} = \frac{0 + 1 + 2}{3} = 1$$

Suitable methods for introducing oxyalkylene-containing groups onto the above polyvinyl alcohol unit-containing polymeric compound include (1) reacting the polyvinyl alcohol unit-containing polymeric compound with an oxirane compound such as ethylene oxide, and (2) reacting the polyvinyl alcohol unit-containing polymeric compound with a polyoxyalkylene compound having a hydroxy-reactive substituent on the end.

In above method (1), the oxirane compound may be any one or combination selected from among ethylene oxide, propylene oxide and glycidol.

If ethylene oxide is reacted in this case, oxyethylene chains are introduced onto the polymeric compound as shown in the following formula.

$$\text{PVA}—(CH_2CH_2O)_a—H$$

In the formula, the letter a is preferably from 1 to 10, and most preferably from 1 to 5.

If propylene oxide is reacted instead, oxypropylene chains are introduced onto the polymeric compound as shown below.

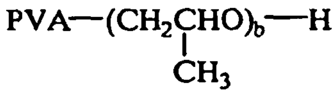

In the formula, the letter b is preferably from 1 to 10, and most preferably from 1 to 5.

And if glycidol is reacted, two branched chains (1) and (2) are introduced onto the compound, as shown below.

Reaction of a hydroxyl group on the PVA with glycidol can proceed in either of two ways: a attack or b attack. The reaction of one glycidol molecule creates two new hydroxyl groups, each of which can in turn react with glycidol. As a result, the two following branched chains (1) and (2) are introduced onto the hydroxyl groups of the PVA units.

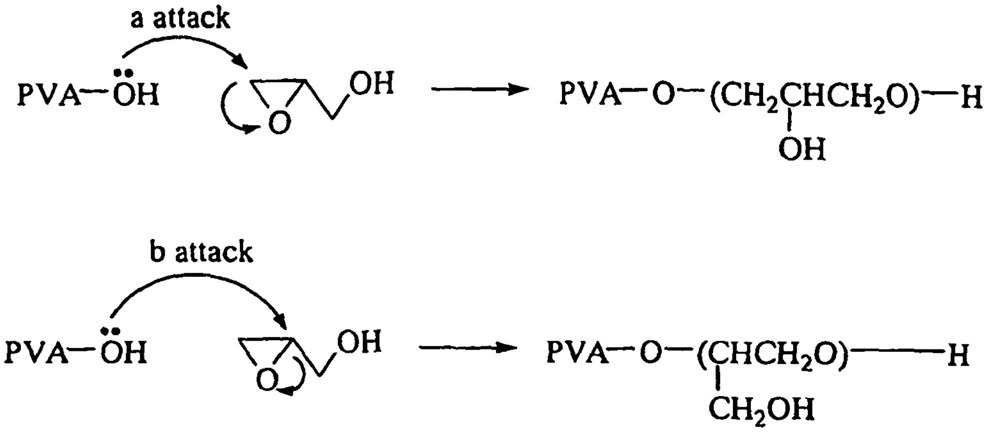


PVA-OH: hydroxyl group-bearing PVA unit

(1) 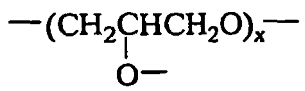 (2) 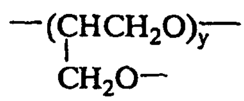

In branched chains (1) and (2), the value x+y is preferably from 1 to 10, and most preferably from 1 to 5. The ratio of x to y is not particularly specified, although x:y generally falls within a range of 0.4:0.6 to 0.6:0.4.

The reaction of the polyvinyl alcohol unit-containing polymeric compound with the above oxirane compound can be carried out using a basic catalyst such as sodium hydroxide, potassium hydroxide or any of various amine compounds.

The reaction of polyvinyl alcohol with glycidol is described for the purpose of illustration. First, the reaction vessel is charged with a solvent and polyvinyl alcohol. It is not essential in this case for the polyvinyl alcohol to dissolve in the solvent. That is, the polyvinyl alcohol may be present in the solvent either in a uniformly dissolved state or in a suspended state. A given amount of a basic catalyst, such as aqueous sodium hydroxide, is added and stirred for a while into the solution or suspension, following which glycidol diluted with a solvent is added. Reaction is carried out at a given temperature for a given length of time, after which the polyvinyl alcohol is removed. If the polyvinyl alcohol is present within the reaction mixture in undissolved form, it is separated off by filtration using a glass filter, for example. If, on the other hand, the polyvinyl alcohol is dissolved within the reaction mixture, it is precipitated out of solution by pouring an alcohol or other suitable precipitating agent into the reaction mixture, following which the precipitate is separated off using a glass filter or the like. The modified polyvinyl alcohol product is purified by dissolution in water, neutralization, and either passage through an ion-exchange resin or dialysis. The purified product is then freeze-dried, giving a dihydroxypropylated polyvinyl alcohol.

In the reaction, the molar ratio between the polyvinyl alcohol and the oxirane compound is preferably 1:10 to 1:30, and most preferably 1:10 to 1:20.

The polyoxyalkylene compound having a hydroxy-reactive substituent at the end used in above method (2)

may be a compound of general formula (4) below.

$$A—(R^{17}O)_{\ell}—R^{18} \qquad (4)$$

In formula (4), the letter A represents a monovalent substituent having reactivity with hydroxyl groups. Illustrative examples include isocyanate groups, epoxy groups, carboxyl groups, carboxylic acid chloride groups, ester groups, amide groups, halogen atoms such as fluorine, bromine and chlorine, silicon-bearing reactive substituents, and other monovalent substituents capable of reacting with hydroxyl groups. Of these, isocyanate groups, epoxy groups, and acid chloride groups are preferred on account of their reactivity.

The carboxyl group may also be an acid anhydride. Preferred ester groups are methyl ester and ethyl ester groups. Examples of suitable silicon-bearing reactive substituents include substituents having terminal SiH or SiOH groups.

The hydroxy-reactive group, such as isocyanate or epoxy, may be bonded directly to the oxyalkylene group $R^{17}O$ or through, for example, an intervening oxygen atom, sulfur atom, carbonyl group, carbonyloxy group, nitrogenous group (e.g., NH-, $N(CH_3)$-, $N(C_2H_5)$-) or $SO_2$ group. Preferably, the hydroxy-reactive group is bonded to the oxyalkylene group $R^{16}O$ through, for example, an alkylene, alkenylene or arylene group having 1 to 10 carbons, and especially 1 to 6 carbons.

Examples of polyoxyalkylene groups bearing this type of substituent A that may be used are the products obtained by reacting a polyisocyanate compound at the hydroxyl end group on a polyoxyalkylene group. Isocyanate group-bearing compounds that may be used in this case include compounds having two or more isocyanate groups on the molecule, such as tolylene diisocyanate, xylylene diisocyanate, naphthylene diisocyanate, diphenylmethane diisocyanate, biphenylene diisocyanate, diphenyl ether diisocyanate, tolidine diisocyanate, hexamethylene diisocyanate and isophorone diisocyanate. For example, use can be made of compounds obtained from the following reaction.

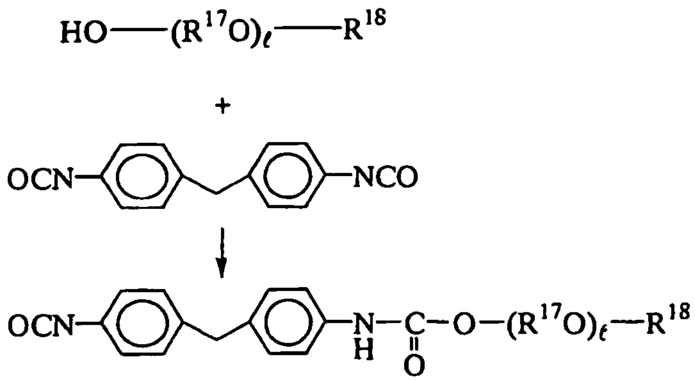

In the formula, $R^{17}O$ is an oxyalkylene group of 2 to 5 carbons, examples of which include $-CH_2CH_2O-$, $-CH_2CH_2CH_2O-$, $-CH_2CH(CH_3)O-$, $-CH_2CH(CH_2CH_3)O-$ and $-CH_2CH_2CH_2CH_2O-$. The letter $\ell$ represents the number of moles of the oxyalkylene group added. This number of added moles ($\ell$) is preferably from 1 to 100, and most preferably from 1 to 50.

Here, the polyoxyalkylene chain represented by above formula ($R^{17}O$), is most preferably a polyethylene glycol chain, a polypropylene glycol chain or a polyethylene oxide (EO)/polypropylene oxide (PO) copolymer chain. The weight-average molecular weight of the polyoxyalkylene chain is preferably from 100 to 3,000, and most preferably within the range of 200 to 1,000 at which the compound is liquid at room temperature.

$R^{18}$ in the above formula is a capping moiety for one end of the chain. This represents a hydrogen atom, a substituted or unsubstituted monovalent hydrocarbon group having 1 to 10 carbons, or a $R^{18}CO$- group (wherein $R^{18}$ is a substituted or unsubstituted monovalent hydrocarbon group having 1 to 10 carbons).

Illustrative examples of $R^{18}CO$- groups that may be used as the capping moiety include those in which $R^{18}$ is a substituted or unsubstituted monovalent hydrocarbon group of 1 to 10 carbons. Preferred examples of $R^{18}$ include alkyl or phenyl groups which may be substituted with cyano, acyl groups, benzoyl groups and cyanobenzoyl groups.

The foregoing substituted or unsubstituted monovalent hydrocarbon groups of 1 to 10 carbons are exemplified by the same groups as those mentioned above for $R^1$ and $R^2$. Such groups having 1 to 8 carbons are especially preferred.

The reaction in method (2) between the above-described polyvinyl alcohol unit-containing polymeric compound and the above-described polyoxyalkylene compound having a hydroxy-reactive substituent at the end may be carried out in the same manner as the reaction carried out with an oxirane compound in method (1).

In the reaction, the molar ratio between the polyvinyl alcohol and the polyoxyalkylene compound having a hydroxy-reactive substituent at the end is preferably from 1:1 to 1:20, and most preferably from 1:1 to 1:10.

The structure of the polymeric compound in which oxyalkylene-containing groups have been introduced onto polyvinyl alcohol units can be verified by $^{13}C$-NMR spectroscopy.

The extent to which the oxyalkylene chain-bearing polyvinyl alcohol unit-containing polymeric compound serving as component (b) of binder polymer B contains oxyalkylene groups can be determined in this case using various analytical techniques such as NMR and elemental analysis, although a method of determination based on the weight of the polymer charged as a reactant and the increase in weight of the polymer formed by the reaction is simple and convenient. For example, determination from the yield may be carried out by precisely measuring both the weight of the polyvinyl alcohol unit-containing polymeric compound charged into the reaction and the weight of the oxyalkylene group-bearing polyvinyl alcohol unit-containing polymeric compound obtained from the reaction, then using this difference to calculate the quantity of oxyalkylene chains that have been introduced onto the molecule (referred to hereinafter as the average molar substitution, or "MS").

The average molar substitution serves here as an indicator of the number of moles of oxyalkylene groups that have been introduced onto the molecule per polyvinyl alcohol unit. In the polymeric compound of the invention, the average molar substitution must be at least 0.3, and is preferably at least 0.5, more preferably at least 0.7 and most preferably at least 1.0. No particular upper limit is imposed on the average molar substitution, although a value not higher than 20 is preferred. Too low an average molar substitution may result in a failure of the ion-conductive salt to dissolve, lower ion mobility and lower ionic conductivity. On the other hand, increasing the average molar substitution beyond a certain level fails to yield any further change in the solubility of the ion-conductive salt or ion mobility and is thus pointless.

Depending on its average degree of polymerization, the oxyalkylene chain-bearing polyvinyl alcohol unit-containing polymeric compound used as component (b) varies in appearance at room temperature (20°C) from a highly viscous molasses-like liquid to a rubbery solid. The higher the average molecular weight, the more the compound, with its low fluidity, qualifies as a solid at room temperature, albeit a soft, paste-like solid.

Regardless of its average degree of polymerization, the polymeric compound serving as component (b) is not a linear polymer. Rather, due to the interlocking of its highly branched molecular chains, it is an amorphous polymer.

The polyvinyl alcohol derivative used as component (b) can be prepared by capping some or all of the hydroxyl groups on the molecule (these being the sum of the remaining hydroxyl groups from the polyvinyl alcohol units and the hydroxyl groups on the oxyalkylene-containing groups introduced onto the molecule), and preferably at least 10 mol%, with one or more monovalent substituent selected from among halogen atoms, substituted or unsubstituted monovalent hydrocarbon groups having 1 to 10 carbons, $R^{15}CO$- groups (wherein $R^{15}$ is a substituted or unsubstituted monovalent hydrocarbon group of 1 to 10 carbons), $R^{15}{}_3Si$- groups ($R^{15}$ being as defined above), amino groups, alkylamino groups and phosphorus-containing groups.

The foregoing substituted or unsubstituted monovalent hydrocarbon groups of 1 to 10 carbons are exemplified by the same groups as those mentioned above for $R^1$ and $R^2$ . Such groups having 1 to 8 carbons are especially preferred.

Capping may be carried out using known techniques for introducing various suitable substituents onto hydroxyl end groups.

The polyglycidol derivative serving as component (c) of the earlier-described binder polymer C is a compound containing units of formula (5) (referred to hereinafter as "A units")

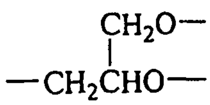

(5)

and units of formula (6) (referred to hereinafter as "B units")

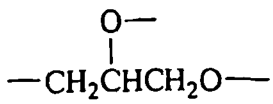

(6) .

The ends of the molecular chains on the compound are capped with specific substituents.

The polyglycidol can be prepared by polymerizing glycidol or 3-chloro-1,2-propanediol, although it is generally advisable to carry out polymerization using glycidol as the starting material.

Known processes for carrying out such a polymerization reaction include (1) processes involving the use of a

basic catalyst such as sodium hydroxide, potassium hydroxide or any of various amine compounds; and (2) processes involving the use of a Lewis acid catalyst (see A. Dworak et al.: *Macromol. Chem. Phys.* **196**, 1963-1970 (1995); and R. Toker: *Macromolecules* **27**, 320-322 (1994)).

The total number of A and B units in the polyglycidol is preferably at least two, more preferably at least six, and most preferably at least ten. There is no particular upper limit, although a total number of such groups which does not exceed 10,000 is preferred. The total number of A and B units is preferably low in cases where the polyglycidol must have the flowability of a liquid, and is preferably high where a high viscosity is required.

The order of these A and B units is not regular, but random. Any combination is possible, including, for example, -A-A-A, -A-A-B-, -A-B-A-, -B-A-A-, -A-B-B-, -B-A-B-, -B-B-A- and -B-B-B-.

The polyglycidol has a polyethylene glycol equivalent weight-average molecular weight (Mw), as determined by gel permeation chromatography (GPC), within a range of preferably 200 to 730,000, more preferably 200 to 100,000, and most preferably 600 to 20,000. Polyglycidol having a weight-average molecular weight of up to about 2,000 is a highly viscous liquid that flows at room temperature, whereas polyglycidol with a weight-average molecular weight above 3,000 is a soft, paste-like solid at room temperature. The average molecular weight ratio (Mw/Mn) is preferably 1.1 to 20, and most preferably 1.1 to 10.

Depending on its molecular weight, the polyglycidol varies in appearance at room temperature (20°C) from a highly viscous molasses-like liquid to a rubbery solid. The higher the molecular weight, the more the compound, with its low fluidity, qualifies as a solid at room temperature, albeit a soft, paste-like solid.

Regardless of how large or small its molecular weight, the polyglycidol is not a linear polymer. Rather, due to the interlocking of its highly branched molecular chains, it is an amorphous polymer. This is evident from the wide-angle x-ray diffraction pattern, which lacks any peaks indicative of the presence of crystals.

The ratio of A units to B units in the molecule is within a range of preferably 1/9 to 9/1, and especially 3/7 to 7/3.

In the practice of the invention, component (c) of binder polymer C is a polyglycidol derivative in which at least 10% of the terminal hydroxyl groups on the molecular chains of the above-described polyglycidol are capped with one or more type of monovalent group selected from among halogen atoms, substituted or unsubstituted monovalent hydrocarbon groups, $R^{15}CO$- groups (wherein $R^{15}$ is a substituted or unsubstituted monovalent hydrocarbon group), $R^{15}{}_3Si$-groups (wherein $R^{15}$ is as defined above), amino groups, alkylamino groups, $H(OR^{16})_m$- groups (wherein $R^{16}$ is an alkylene group of 2 to 5 carbons, and the letter m is an integer from 1 to 100), and phosphorus-containing groups.

The foregoing substituted or unsubstituted monovalent hydrocarbon groups of 1 to 10 carbons are exemplified by the same groups as those mentioned above for $R^1$ and $R^2$. Such groups having 1 to 8 carbons are especially preferred.

Capping may be carried out using known techniques for introducing various suitable substituents onto hydroxyl end groups.

Any of the following may be used as the crosslinkable functional group-bearing compound serving as component (d):

(1) an epoxy group-bearing compound in combination with a compound having two or more active hydrogens capable of reacting with the epoxy group;
(2) an isocyanate group-bearing compound in combination with a compound having two or more active hydrogens capable of reacting with the isocyanate group;
(3) a compound having two or more reactive double bonds.

Illustrative examples of the epoxy group-bearing compound (1) include compounds having two or more epoxy groups on the molecule, such as sorbitol polyglycidyl ether, sorbitan polyglycidyl ether, polyglycerol polyglycidyl ether, pentaerythritol polyglycidyl ether, diglycerol polyglycidyl ether, triglycidyl tris(2-hydroxyethyl) isocyanurate, glycerol polyglycidyl ether, trimethylpropane polyglycidyl ether, resorcinol diglycidyl ether, 1,6-hexanediol diglycidyl ether, ethylene glycol diglycidyl ether, propylene glycol diglycidyl ether, the diglycidyl ethers of ethylene-propylene glycol copolymers, polytetramethylene glycol diglycidyl ether and adipic acid diglycidyl ether.

A three-dimensional network structure can be formed by reacting the above epoxy group-bearing compound with a compound having at least two active hydrogens, such as an amine, alcohol, carboxylic acid or phenol. Illustrative examples of the latter compound include polymeric polyols such as polyethylene glycol, polypropylene glycol and ethylene glycol-propylene glycol copolymers, and also ethylene glycol, 1.2-propylene glycol, 1,3-propylene glycol, 1,3-butanediol, 1,4-butanediol, 1.5-pentanediol. 1,6-hexanediol, 2,2-dimethyl-1,3-propanediol, diethylene glycol, dipropylene glycol, 1.4-cyclohexanedimethanol, 1,4-bis(β-hydroxyethoxy)benzene and p-xylylenediol; polyamines such as phenyl diethanolamine, methyl diethanolamine and polyethyleneimine; and polycarboxylic acids.

Illustrative examples of the isocyanate group-bearing compound (2) include compounds having two or more isocyanate groups, such as tolylene diisocyanate, xylylene diisocyanate, naphthylene diisocyanate, diphenylmethane diisocyanate, biphenylene diisocyanate, diphenyl ether diisocyanate, tolidine diisocyanate, hexamethylene diisocyanate and isophorone diisocyanate.

An isocyanato-terminal polyol compound prepared by reacting the above isocyanate compound with a polyol compound can also be used. Such compounds can be prepared by reacting an isocyanate such as diphenylmethane diisocyanate or tolylene diisocyanate with one of the polyol compounds listed below.

In this case, the stoichiometric ratio between the isocyanate groups [NCO] on the isocyanate compound and the hydroxyl groups [OH] on the polyol compound is such as to satisfy the condition [NCO] > [OH]. The ratio [NCO]/[OH] is preferably in a range of 1.03/1 to 10/1, and especially 1.10/1 to 5/1.

Suitable examples of the polyol compound include polymeric polyols such as polyethylene glycol, polypropylene glycol and ethylene glycol-propylene glycol copolymers: and also ethylene glycol, 1,2-propylene glycol, 1,3-propylene glycol, 1,3-butanediol, 1,4-butanediol, 1,5-pentanediol, 1,6-hexanediol, 2.2-dimethyl-1.3-propanediol, diethylene glycol, dipropylene glycol, 1,4-cyclohexanedimethanol, 1,4-bis-(β-hydroxyethoxy)benzene, p-xylylenediol, phenyl diethanolamine, methyl diethanolamine and 3,9-bis(2-hydroxy-1,1-dimethyl)-2,4,8,10-tetraoxaspiro[5,5]undecane.

Alternatively, instead of the polyol, an amine having two or more active hydrogens may be reacted with the isocyanate. The amine used may be one having a primary or a secondary amino group, although a primary amino group-bearing compound is preferred. Suitable examples include diamines such as ethylenediamine, 1,6-diaminohexane, 1,4-diaminobutane and piperazine; polyamines such as polyethyleneamine; and amino alcohols such as N-methyldiethanolamine and aminoethanol. Of these, diamines in which the functional groups have the same level of reactivity are especially preferred. Here again, the stoichiometric ratio between [NCO] groups on the isocyanate compound and [$NH_2$] and [NH] groups on the amine compound is such as to satisfy the condition [NCO] > [$NH_2$] + [NH].

The above isocyanate group-bearing compound cannot by itself form a three-dimensional network structure. However, a three-dimensional network structure can be formed by reacting the isocyanate group-bearing compound with a compound having at least two active hydrogens, such as an amine, alcohol, carboxylic acid or phenol. Illustrative examples of such compounds having at least two active hydrogens include polymeric polyols such as polyethylene glycol, polypropylene glycol and ethylene glycol-propylene glycol copolymers, and also ethylene glycol, 1,2-propylene glycol, 1,3-propylene glycol, 1,3-butanediol, 1,4-butanediol, 1,5-pentanediol, 1,6-hexanediol, 2,2-dimethyl-1,3-propanediol, diethylene glycol, dipropylene glycol, 1,4-cyclohexanedimethanol, 1,4-bis(β-hydroxyethoxy)benzene and p-xylylenediol; polyamines such as phenyl diethanolamine, methyl diethanolamine and polyethyleneimine; and polycarboxylic acids.

Illustrative examples of the above reactive double bond-bearing compound (3) which may be used as the crosslinkable functional group-bearing compound serving as component (d) include compounds containing two or more reactive double bonds, such as divinylbenzene, divinylsulfone, allyl methacrylate, ethylene glycol dimethacrylate, diethylene glycol dimethacrylate, triethylene glycol dimethacrylate, polyethylene glycol dimethacrylate (average molecular weight, 200 to 1,000), 1,3-butylene glycol dimethacrylate, 1,6-hexanediol dimethacrylate, neopentyl glycol dimethacrylate, polypropylene glycol dimethacrylate (average molecular weight, 400), 2-hydroxy-1,3-dimethacryloxypropane, 2,2-bis[4-(methacryloxyethoxy)phenyl]-propane, 2,2-bis[4-(methacryloxyethoxy-diethoxy)phenyl]-propane, 2,2-bis [4-(methacryloxyethoxy-polyethoxy)phenyl]-propane, ethylene glycol diacrylate, diethylene glycol diacrylate, triethylene glycol diacrylate, polyethylene glycol diacrylate (average molecular weight, 200 to 1,000), 1,3-butylene glycol diacrylate, 1,6-hexanediol diacrylate, neopentyl glycol diacrylate, polypropylene glycol diacrylate (average molecular weight, 400), 2-hydroxy-1,3-diacryloxypropane, 2,2-bis[4-(acryloxyethoxy)phenyl]propane, 2,2-bis[4-(acryloxyethoxy-diethoxy)phenyl]propane, 2,2-bis[4-(acryloxyethoxy-polyethoxy)phenyl]propane, trimethylolpropane triacrylate, trimethylolpropane trimethacrylate, tetramethylolmethane triacrylate, tetramethylolmethane tetraacrylate, tricyclodecane dimethanol acrylate, hydrogenated dicyclopentadiene diacrylate, polyester diacrylate, polyester dimethacrylate, and the above-described unsaturated polyurethane compounds (I).

If necessary, a compound containing an acrylic or methacrylic group may be added. Examples of such compounds include acrylates and methacrylates such as glycidyl methacrylate, glycidyl acrylate and tetrahydrofurfuryl methacrylate, as well as methacryloyl isocyanate, 2-hydroxymethylmethacrylic acid and N,N-dimethylaminoethylmethacrylic acid. Other reactive double bond-containing compounds may be added as well, such as acrylamides (e.g., N-methylolacrylamide, methylenebisacrylamide, diacetoneacrylamide), and vinyl compounds such as vinyloxazolines and vinylene carbonate.

Here too, in order to form a three-dimensional network structure, a compound having at least two reactive double bonds must be added. That is, a three-dimensional network structure cannot be formed with only compounds such as methyl methacrylate that have but a single reactive double bond. Some addition of a compound bearing at least two reactive double bonds is required.

Of the aforementioned reactive double bond-bearing compounds, especially preferred reactive monomers include the above-described unsaturated polyurethane compounds (I) and polyoxyalkylene component-bearing diesters of general formula (7) below. The use of these in combination with a polyoxyalkylene component-bearing monoester of general formula (8) below is recommended.

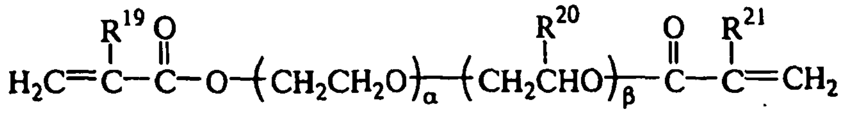

(7)

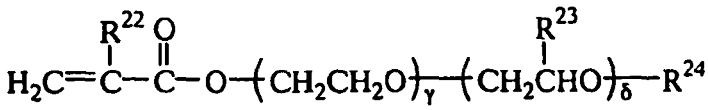

(8)

In formula (7), $R^{19}$, $R^{20}$ and $R^{21}$ are each independently a hydrogen atom or an alkyl group having 1 to 6 carbons, and preferably 1 to 4 carbons, such as methyl, ethyl, n-propyl, i-propyl, n-butyl, i-butyl, s-butyl and t-butyl; and $\alpha$ and $\beta$ satisfy the condition $\alpha \geq 1$ and $\beta \geq 0$ or the condition $\alpha \geq 0$ and $\beta \geq 1$. The sum $\alpha+\beta$ is preferably no higher than 100, and especially from 1 to 30. $R^{19}$, $R^{20}$ and $R^{21}$ are most preferably methyl, ethyl, n-propyl, i-propyl, n-butyl, i-butyl, s-butyl or t-butyl.

In formula (8), $R^{22}$, $R^{23}$ and $R^{24}$ are each independently a hydrogen atom or an alkyl group having 1 to 6 carbons, and preferably 1 to 4 carbons, such as methyl, ethyl, n-propyl, i-propyl, n-butyl, i-butyl, s-butyl and t-butyl; and $\gamma$ and $\delta$ satisfy the condition $\gamma \geq 1$ and $\delta \geq 0$ or the condition $\gamma \geq 0$ and $\delta \geq 1$. The sum $\gamma+\delta$ is preferably no higher than 100, and especially from 1 to 30. $R^{22}$, $R^{23}$ and $R^{24}$ are most preferably methyl, ethyl, n-propyl, i-propyl, n-butyl, i-butyl, s-butyl or t-butyl.

Typically, the above-described unsaturated polyurethane compound (I) or polyoxyalkylene component-bearing diester and the polyoxyalkylene component-bearing monoester are heated or exposed to a suitable form of radiation, such as electron beams, microwaves or radio-frequency radiation, within the electrode composition, or a mixture of the compounds is heated, so as to form the three-dimensional network structure.

A three-dimensional network structure can generally be formed by reacting only the above-described unsaturated polyurethane compound (I) or the polyoxyalkylene component-bearing diester. However, as already noted, the addition of a polyoxyalkylene component-bearing monoester, which is a monofunctional monomer, to the unsaturated polyurethane compound or the polyoxyalkylene component-bearing diester is preferred because such addition introduces polyoxyalkylene branched chains onto the three-dimensional network.

No particular limitation is imposed on the relative proportions of the unsaturated polyurethane compound or polyoxyalkylene component-bearing diester and the polyoxyalkylene component-bearing monoester, although a weight ratio (unsaturated polyurethane compound or polyoxyalkylene component-bearing diester)/(polyoxyalkylene component-bearing monoester) within a range of 0.2 to 10, and especially 0.5 to 5, is preferred for enhancing the strength of the electrode coat.

The binder polymer containing component (a), (b) or (c) in combination with component (d), when heated or exposed to a suitable form of radiation, such as electron beams, microwaves or radio-frequency radiation, forms a semi-interpenetrating polymer network structure in which molecular chains of a polymer of component (a), (b) or (c) are interlocked with the three-dimensional network structure of a polymer formed by the reaction (polymerization) of the crosslinkable functional group-bearing compound serving as component (d).

Thermoplastic resins containing units of general formula (2) below may be used as the above-mentioned type (III) binder polymer.

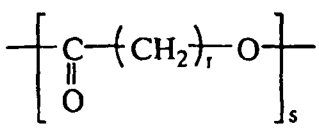

(2)

In the formula, the letter r is 3, 4 or 5, and the letter's is an integer ≥5.

Such a thermoplastic resin is preferably a thermoplastic polyurethane resin prepared by reacting (E) a polyol compound with (F) a polyisocyanate compound and (G) a chain extender. Suitable thermoplastic polyurethane resins include not only polyurethane resins having urethane linkages, but also polyurethane-urea resins having both urethane linkages and urea linkages.

The polyol compound serving as component (E) above is preferably one prepared by the dehydration or dealcoholation of any of compounds (i) to (vi) below, and most preferably a polyester polyol, a polyester polyether polyol, a polyester polycarbonate polyol, a polycaprolactone polyol, or a mixture thereof:

(i) polyester polyols prepared by the ring-opening polymerization of one or more cyclic ester (lactone);
(ii) polyester polyols prepared by reacting at least one of the above polyester polyols obtained by the ring-opening polymerization of a cyclic ester (lactone) with at least one carboxylic acid and at least one compound selected from the group consisting of dihydric aliphatic alcohols, carbonate compounds, polycarbonate polyols and polyether polyols;
(iii) polyester polyols prepared by reacting at least one carboxylic acid with at least one dihydric aliphatic alcohol;
(iv) polyester polycarbonate polyols prepared by reacting at least one carboxylic acid with at least one polycarbonate polyol;
(v) polyester polyether polyols prepared by reacting at least one carboxylic acid with at least one polyether polyol; and
(vi) polyester polyols prepared by reacting at least one carboxylic acid with two or more compounds selected from the group consisting of dihydric aliphatic alcohols, polycarbonate polyols and polyether polyols.

Examples of suitable cyclic esters (lactones) include γ-butyrolactone, δ-valerolactone and ε-caprolactone.

Examples of suitable carboxylic acids include linear aliphatic dicarboxylic acids having 5 to 14 carbons, such as glutaric acid, adipic acid, pimelic acid, suberic acid, azelaic acid, sebacic acid and dodecanedioic acid; branched aliphatic dicarboxylic acids having 5 to 14 carbons, such as 2-methylsuccinic acid, 2-methyladipic acid, 3-methyladipic acid, 3-methylpentanedioic acid, 2-methyloctanedioic acid, 3,8-dimethyldecanedioic acid and 3,7-dimethyldecanedioic acid; aromatic dicarboxylic acids such as terephthalic acid, isophthalic acid and o-phthalic acid; and ester-forming derivatives thereof. Any one or combinations of two or more of the above may be used. Of these, linear or branched aliphatic dicarboxylic acids having 5 to 14 carbons are preferred. The use of adipic acid, azelaic acid or sebacic acid is especially preferred.

Examples of suitable divalent aliphatic alcohols include linear aliphatic diols of 2 to 14 carbons, such as ethylene glycol, 1,3-propanediol, 1,4-butanediol, 1,5-pentanediol, 1,6-hexanediol, 1,7-heptanediol, 1,8-octanediol, 1,9-nonanediol and 1,10-decanediol; branched aliphatic diols of 3 to 14 carbons, including 2-methyl-1,3-propanediol, neopentyl glycol, 3-methyl-1,5-pentanediol and 2-methyl-1,8-octanediol; and alicyclic diols such as cyclohexanedimethanol and cyclohexanediol. Any one or combinations of two or more of the above may be used. Of these, linear or branched aliphatic diols having 4 to 10 carbons are preferred, and 3-methyl-1,5-pentanediol is especially preferred.

Examples of suitable carbonate compounds include dialkyl carbonates such as dimethyl carbonate and diethyl carbonate, alkylene carbonates such as ethylene carbonate, and diaryl carbonates such as diphenyl carbonate.

Suitable polycarbonate polyols include those prepared by a dealcoholation reaction between a polyhydric alcohol and one or more of the above carbonate compounds. Illustrative examples of the polyhydric alcohol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, diethylene glycol and 1,4-cyclohexanedimethanol.

Suitable polyether polyols include polyethylene glycol, polypropylene glycol, ethylene oxide/propylene oxide copolymers and polyoxytetramethylene glycol. Any one or combinations of two or more of these may be used.

The polyol compound serving as component (E) has a number-average molecular weight of preferably 1,000 to 5,000, and most preferably 1,500 to 3,000. A polyol compound having too small a number-average molecular weight may lower the physical properties of the resulting thermoplastic polyurethane resin film, such as the heat resistance and tensile elongation. On the other hand, too large a number-average molecular weight increases the viscosity during synthesis, which may lower the production stability of the thermoplastic polyurethane resin being prepared. The number-average molecular weights used here in connection with polyol compounds are calculated based on the hydroxyl values measured in accordance with JIS K1577.

Illustrative examples of the polyisocyanate compound serving as above component (F) include aromatic diisocyanates such as tolylene diisocyanate, 4,4'-diphenylmethane diisocyanate, p-phenylene diisocyanate, 1,5-naphthylene diisocyanate, 3,3'-dichloro-4,4'-diphenylmethane diisocyanate and xylylene diisocyanate; and aliphatic or alicyclic diisocyanates such as hexamethylene diisocyanate, isophorone diisocyanate, 4,4'-dicyclohexylmethane diisocyanate and hydrogenated xylylene diisocyanate.

The chain extender serving as above component (G) is preferably a low-molecular-weight compound having a molecular weight of not more than 300 and bearing two active hydrogen atoms capable of reacting with isocyanate groups.

Illustrative examples of such low-molecular-weight compounds include aliphatic diols such as ethylene glycol, diethylene glycol, propylene glycol, 1,3-propanediol. 1,4-butanediol, 1,5-pentanediol, 1,6-hexanediol, 1,7-heptanediol, 1,8-octanediol and 1,9-nonanediol; aromatic or alicyclic diols such as 1,4-bis(β-hydroxyethoxy)benzene, 1,4-cyclohexanediol, bis(β-hydroxyethyl) terephthalate and xylylene glycol; diamines such as hydrazine, ethylenediamine, hexamethylenediamine, propylenediamine, xylylenediamine, isophoronediamine, piperazine, piperazine derivatives, phenylenediamine and tolylenediamine; and amino alcohols such as adipoyl hydrazide and isophthaloyl hydrazide. Any one or combinations of two or more of these may be used.

In preparing a thermoplastic polyurethane resin for use in the invention, it is advantageous to react components (E) to (G) in the following proportions:

(E) 100 parts by weight of the polyol compound;
(F) 5 to 200 parts by weight, and preferably 20 to 100 parts by weight, of the polyisocyanate compound;
(G) 1 to 200 parts by weight, and preferably 5 to 100 parts by weight, of the chain extender.

The thermoplastic resin has a swelling ratio, as determined from the formula indicated below, within a range of 150 to 800%, preferably 250 to 500%, and most preferably 250 to 400%.

$$\text{Swelling ratio (\%)} = \frac{\text{weight in grams of swollen, ion-conductive thermoplastic resin composition after 24-hour immersion in electrolyte solution at 20°C (g)}}{\text{weight in grams of thermoplastic resin before immersion in electrolyte solution (g)}} \times 100$$

Illustrative examples of fluoropolymer materials that may be used as the above-mentioned type (IV) binder polymer include polyvinylidene fluoride (PVDF), vinylidene fluoride-hexafluoropropylene (HFP) copolymer (P(VDF-HFP)), vinylidene fluoride-chlorotrifluoroethylene (CTFE) copolymer (P(VDF-CTFE)), vinylidene fluoride-hexafluoropropylene fluororubber (P(VDF-HFP)), vinylidene fluoride-tetrafluoroethylene-hexafluoropropylene fluororubber (P(VDF-TFE-HFP)) and vinylidene fluoride-tetrafluoroethylene-perfluoro(alkyl vinyl ether) fluororubber. The fluoropolymer has a vinylidene fluoride content of preferably at least 50 wt%, and most preferably at least 70 wt%. The upper limit in the vinylidene fluoride content of the fluoropolymer is preferably about 97 wt%. Of the above fluoropolymers, the use of polyvinylidene fluoride (PVDF), a copolymer of vinylidene fluoride and hexafluoropropylene (P(VDF-HFP)), or a copolymer of vinylidene fluoride and chlorotrifluoroethylene (P(VDF-CTFE)) is preferred.

The fluoropolymer typically has a weight-average molecular weight of at least 500,000, preferably from 500,000 to 2,000,000, and most preferably from 500,000 to 1,500,000. Too low a weight-average molecular weight may result in an excessive decline in physical strength.

The polarizable electrode composition prepared as described above is coated onto a current conductor, thereby forming a polarizable electrode according to the invention.

Thus-produced polarizable electrodes of the invention have an impedance, as measured by the method described below, of at most 200 mΩ, and preferably at most 100 mΩ.

[Method of Measuring Impedance]

The polarizable electrode composition was coated with a doctor blade onto 20 μm thick aluminum foil, then dried at 80° C for 2 hours to effect curing, thereby forming a sample electrode. The electrode was roll-pressed, thereby setting the thickness of the electrode sheet to 100 μm. A 20 mm diameter disc was cut from the resulting electrode, sandwiched under a pressure of 0.3 MPa between two copper discs having the same diameter of 20 mm, and the AC impedance was measured at a frequency of 1 kHz.

<Electrical Double-Layer Capacitors>

The electrical double-layer capacitor of the invention is composed of a pair of polarizable electrodes produced as described above and a separator between the polarizable electrodes. The resulting assembly is filled with an electrolyte. Polarizable electrodes according to the invention are used as the polarizable electrodes in the capacitor.

The electrolyte solution is prepared by dissolving an ion conductive salt in a solvent in which it is soluble. The ion-conductive salt may be any ion-conductive salt employed in conventional electrical double-layer capacitors. Preferred examples include salts obtained by combining a quaternary onium cation of the general formula $R^{25}R^{26}R^{27}R^{28}N^+$ or $R^{25}R^{26}R^{27}R^{28}P^+$ (wherein $R^{25}$ to $R^{28}$ are each independently alkyls of 1 to 10 carbons) with an anion such as $BF_4^-$, $N(CF_3SO_2)_2^-$, $PF_6^-$ or $ClO_4^-$.

Illustrative examples include $(C_2H_5)_4PBF_4$, $(C_3H_7)_4PBF_4$, $(C_4H_9)_4PBF_4$, $(C_6H_{13})_4PBF_4$, $(C_4H_9)_3CH_3PBF_4$,

$(C_2H_5)_3(Ph\text{-}CH_2)PBF_4$, (wherein Ph stands for phenyl), $(C_2H_5)_4PPF_6$, $(C_2H_5)_4PCF_3SO_3$, $(C_2H_5)_4PN(CF_3SO_2)_2$, $(C_2H_5)_4NBF_4$, $(C_4H_9)_4NBF_4$, $(C_6H_{13})_4NBF_4$, $(C_2H_5)_4NPF_6$, $LiBF_4$ and $LiCF_3SO_3$. These may be used alone or as combinations of two or more thereof.

Illustrative examples of the solvent in which the ion-conductive salt is soluble include acyclic ethers such as dibutyl ether, 1,2-dimethoxyethane, 1,2-ethoxymethoxyethane, methyl diglyme, methyl triglyme, methyl tetraglyme, ethyl glyme, ethyl diglyme, butyl diglyme, and glycol ethers (e.g., ethyl cellosolve, ethyl carbitol, butyl cellosolve, butyl carbitol); heterocyclic ethers such as tetrahydrofuran, 2-methyltetrahydrofuran, 1,3-dioxolane and 4,4-dimethyl-1,3-dioxane; butyrolactones such as γ-butyrolactone, γ-valerolactone, δ-valerolactone, 3-methyl-1,3-oxazolidin-2-one and 3-ethyl-1,3-oxazolidin-2-one; and other solvents commonly used in electrochemical devices, such as amide solvents (e.g., N-methylformamide, N,N-dimethylformamide, N-methylacetamide and N-methylpyrrolidinone), carbonate solvents (e.g., diethyl carbonate, dimethyl carbonate, ethylmethyl carbonate, propylene carbonate, ethylene carbonate, styrene carbonate), and imidazolidinone solvents (e.g., 1,3-dimethyl-2-imidazolidinone). These solvents may be used singly or as mixtures of two or more thereof.

In the electrolyte solution, the concentration of ion-conductive salt in the solvent is preferably 0.5 to 3.0 mol/L, and most preferably 0.7 to 2.2 mol/L.

The separator may be composed of a type of separator base that is commonly used in electrical double-layer capacitors. Illustrative examples include polyethylene nonwoven fabric, polypropylene nonwoven fabric, polyester nonwoven fabric, polytetrafluoroethylene porous film, kraft paper, sheet laid from a blend of rayon fibers and sisal fibers, manila hemp sheet, glass fiber sheet, cellulose-based electrolytic paper, paper made from rayon fibers, paper made from a blend of cellulose and glass fibers, and combinations thereof in the form of multilayer sheets.

Alternatively, the polymer binder used in the above-described polarizable electrode for electrical double-layer capacitors may be formed into a film and used also as the separator. In such a case, because the separator has the same composition as the polymer binder in the electrode, the electrode-separator boundary can be integrally controlled, making it possible to further lower the internal resistance of the capacitor.

Using low-impedance polarizable electrodes in the electrical double-layer capacitor of the invention gives the capacitor a high power and a high energy density.

The electrical double-layer capacitors of the invention are well-suited for use in a broad range of applications, including memory backup power supplies for personal computers and wireless terminals, uninterruptible power supplies for personal computers and other equipment, in electric cars and hybrid cars, together with solar cells as energy storage systems for solar power generation, and in combination with other batteries as load-leveling power supplies.

## EXAMPLE

The following synthesis examples, examples of the invention and comparative examples are provided to illustrate the invention, but are not intended to limit the scope thereof.

### Synthesis Example 1

Synthesis of Unsaturated Polyurethane Compound

A reactor equipped with a stirrer, a thermometer and a condenser was charged with 870 parts by weight of dehydrated ethylene oxide (EO)/propylene oxide (PO) random copolymer diol (molar ratio of EO/PO = 7/3) having a hydroxyl number of 36.1, 107.4 parts by weight of 4,4'-diphenylmethane diisocyanate, and 100 parts by weight of methyl ethyl ketone as the solvent. These ingredients were stirred and thereby mixed for 3 hours at 80°C, giving a polyurethane prepolymer with isocyanate end groups.

Next, the entire reactor was cooled to 50°C, then 0.3 part by weight of benzoquinone, 5 parts by weight of dibutyltin laurate, 16.3 parts by weight of hydroxyethyl acrylate and 6.3 parts by weight of 1,4-butanediol were added, and the ingredients were reacted at 50°C for 3 hours. The methyl ethyl ketone was subsequently removed under a vacuum, yielding an unsaturated polyurethane compound.

The weight-average molecular weight of the resulting unsaturated polyurethane compound was measured by gel permeation chromatography, and the distributions were found to be 17,300 and 6,200.

### Synthesis Example 2

Synthesis of Cellulose Derivative

Eight grams of hydroxypropyl cellulose (molar substitution, 4.65; product of Nippon Soda Co., Ltd.) was suspended in 400 mL of acrylonitrile, following which 1 mL of 4 wt% aqueous sodium hydroxide was added and the mixture

was stirred 4 hours at 30°C.

The reaction mixture was then neutralized with acetic acid and poured into a large amount of methanol, giving cyanoethylated hydroxypropyl cellulose.

To remove the impurities, the cyanoethylated hydroxypropyl cellulose was dissolved in acetone, following which the solution was placed in a dialysis membrane tube and purified by dialysis using ion-exchanged water. The cyanoethylated hydroxypropyl cellulose which settled out during dialysis was collected and dried.

Elemental analysis of the resulting cyanoethylated hydroxypropyl cellulose indicated a nitrogen content of 7.3 wt%. Based on this value, the proportion of the hydroxyl groups on the hydroxypropyl cellulose that were capped with cyanoethyl groups was 94%.

Synthesis Example 3

Synthesis of Polyglycidol Derivative

A glycidol-containing flask was charged with methylene chloride as the solvent to a glycidol concentration of 4.2 mol/L, and the reaction temperature was set at -10°C.

Trifluoroborate diethyl etherate ($BF_3 \cdot OEt_2$) was added as the catalyst (reaction initiator) to a concentration of $1.2 \times 10^{-2}$ mol/L, and the reaction was carried out by stirring for 3 hours under a stream of nitrogen. Following reaction completion, methanol was added to stop the reaction, after which the methanol and methylene chloride were removed by distillation in a vacuum.

The resulting crude polymer was dissolved in water and neutralized with sodium hydrogen carbonate, after which the solution was passed through a column packed with an ion-exchange resin (produced by Organo Corporation under the trade name Amberlite IRC-76). The eluate was passed through 5C filter paper, the resulting filtrate was distilled in vacuo, and the residue from distillation was dried.

The resulting purified polyglycidol was analyzed by gel permeation chromatography (GPC) using 0.1 M saline as the mobile phase, based upon which the polyethylene glycol equivalent weight-average molecular weight was found to be 6,250. Evaluation of the crystallinity by wide-angle x-ray diffraction analysis showed the polyglycidol to be amorphous. The polyglycidol was a soft, paste-like solid at room temperature.

Three parts by weight of the resulting polyglycidol was mixed with 20 parts of dioxane and 14 parts of acrylonitrile. To this mixed solution was added aqueous sodium hydroxide comprising 0.16 part of sodium hydroxide dissolved in 1 part by weight of water, and stirring was carried out for 10 hours at 25°C to effect the reaction. Following reaction completion, 20 parts of water was added to the mixture, which was then neutralized using an ion-exchange resin (Amberlite IRC-76, produced by Organo Corporation). The ion-exchange resin was separated off by filtration, after which 50 parts by weight of acetone was added to the solution and the insolubles were filtered off. The filtrate was vacuum concentrated, yielding crude cyanoethylated polyglycidol.

The crude cyanoethylated polyglycidol was dissolved in acetone and the solution was filtered using 5A filter paper, then the polyglycidol was precipitated out of solution in water and the precipitate was collected. These two operations (dissolution in acetone and precipitation in water) were repeated twice, following which the product was dried in vacuo at 50°C, giving purified cyanoethylated polyglycidol.

The infrared absorption spectrum of the purified cyanoethylated polyglycidol showed no hydroxyl group absorption, indicating that all the hydroxyl groups had been substituted with cyanoethyl groups. Wide-angle x-ray diffraction analysis to determine the crystallinity showed that the product was amorphous at room temperature. The polyglycidol was a soft, paste-like solid at room temperature.

Synthesis Example 4

Synthesis of Polyvinyl Alcohol Derivative

A reaction vessel equipped with a stirring element was charged with 10 parts by weight of polyvinyl alcohol (average degree of polymerization, 500; vinyl alcohol fraction, ≥98%) and 70 parts by weight of acetone. A solution of 1.81 parts by weight of sodium hydroxide in 2.5 parts by weight of water was gradually added under stirring, after which stirring was continued for one hour at room temperature.

To this solution was gradually added, over a period of 3 hours, a solution of 67 parts by weight of glycidol in 100 parts by weight of acetone. The resulting mixture was stirred for 8 hours at 50°C to effect the reaction. Following reaction completion, stirring was stopped, whereupon the polymer precipitated from the mixture. The precipitate was collected, dissolved in 400 parts by weight of water, and neutralized with acetic acid. The neutralized polymer was purified by dialysis, and the resulting solution was freeze-dried, giving 22.50 parts by weight of dihydroxypropylated polyvinyl alcohol.

Three parts by weight of the resulting polyvinyl alcohol polymer was mixed with 20 parts by weight of dioxane and 14 parts by weight of acrylonitrile. To this mixed solution was added a solution of 0.16 part by weight of sodium hydroxide in 1 part by weight of water, and stirring was carried out for 10 hours at 25°C.
The resulting mixture was neutralized using the ion-exchange resin produced by Organo Corporation under the trade name Amberlite IRC-76. The ion-exchange resin was separated off by filtration, after which 50 parts by weight of acetone was added to the solution and the insolubles were filtered off. The resulting acetone solution was placed in dialysis membrane tubing and dialyzed with running water. The polymer which precipitated within the dialysis membrane tubing was collected and re-dissolved in acetone. The resulting solution was filtered, following which the acetone was evaporated off, giving a cyanoethylated polyvinyl alcohol polymer derivative.
The infrared absorption spectrum of this polymer derivative showed no hydroxyl group absorption, confirming that all the hydroxyl groups were capped with cyanoethyl groups (capping ratio, 100%).

Synthesis Example 5

Thermoplastic Polyurethane Resin

A reactor equipped with a stirrer, a thermometer and a condenser was charged with 64.34 parts by weight of preheated and dehydrated polycaprolactone diol (Praccel 220N, made by Daicel Chemical Industries, Ltd.) and 28.57 parts by weight of 4,4'-diphenylmethane diisocyanate. The reactor contents were stirred and mixed for 2 hours at 120°C under a stream of nitrogen, following which 7.09 parts by weight of 1,4-butanediol was added to the mixture and the reaction was similarly effected at 120°C under a stream of nitrogen. When the reaction reached the point where the reaction product became rubbery, it was stopped. The reaction product was then removed from the reactor and heated at 100°C for 12 hours. Once the isocyanate peak was confirmed to have disappeared from the infrared absorption spectrum, heating was stopped, yielding a solid polyurethane resin.
The resulting polyurethane resin had a weight-average molecular weight (Mw) of $1.71 \times 10^5$. The polyurethane resin, when immersed for 24 hours at 20°C in an electrolyte solution prepared by dissolving 1 mole of $LiPF_6$ as the supporting salt in 1 liter of a 1:1 (by volume) mixture of ethylene carbonate and propylene carbonate, had a swelling ratio of 400%.

Example 1

Fabrication of Carbonaceous Material Powder Mixture for Electrical Double-Layer Capacitors, and Polarizable Electrode (1)

A mixing container was charged with 92 parts by weight of activated carbon (MSP20, produced by Kansai Netsukagaku K.K.; average particle size, 8 pm) and 8 parts by weight of Ketjen black having an average particle size of 30 nm as the conductive powder. The components were dry mixed in a planetary mixer (Mazerustar KK-102N, manufactured by Kurabo Industries, Ltd.) by rotating and revolving the mixing container and its contents at speeds of rotation and revolution of about 1,000 rpm each for three 5-minute cycles, thereby forming a carbonaceous material powder mixture.
Next, 88 parts by weight of the resulting carbonaceous material powder mixture, 8 parts by weight of the unsaturated polyurethane compound prepared in Synthesis Example 1, 4 parts by weight of methoxydiethylene glycol monomethacrylate, 70 parts by weight of N-methyl-2-pyrrolidone and 0.1 part by weight of azobisisobutyronitrile were placed in a mixing container and subjected to three sets of wet mixing and defoaming operations in a planetary mixer (Mazerustar KK-102N, manufactured by Kurabo Industries, Ltd.). Each set of operations consisted of rotating and revolving the mixing container at speeds of rotation and revolution of about 1,000 rpm each for 5 minutes, then at a speed of revolution of about 1,000 rpm and a speed of rotation of about 270 rpm for 1 minute. This process yielded a paste-like polarizable electrode binder composition.
The polarizable electrode binder composition was coated with a doctor blade onto aluminum foil, then dried at 80°C for 2 hours to effect curing, thereby giving a polarizable electrode. Next, the polarizable electrode was roll-pressed, yielding a polarizable electrode having an ultimate thickness of 100 μm and a density of 0.6 g/cm$^3$. A 20 mm diameter disc was cut from the resulting electrode, sandwiched under a pressure of 0.3 MPa between two copper discs having the same diameter of 20 mm, and the AC impedance was measured at a frequency of 1 kHz. The polarizable electrode had an impedance of 140 mΩ.

Example 2

Fabrication of Carbonaceous Material Powder Mixture for Electrical Double-Layer Capacitors, and Polarizable Electrode (2)

A mixing container was charged with 92 parts by weight of activated carbon (MSP20, produced by Kansai Netsukagaku K.K.; average particle size, 8 μm) and 8 parts by weight of Ketjen black having an average particle size of 30 nm as the conductive powder. The components were dry mixed in a planetary mixer (Mazerustar KK-102N, manufactured by Kurabo Industries, Ltd.) by rotating and revolving the mixing container and its contents at speeds of rotation and revolution of about 1,000 rpm each for three 5-minute cycles, thereby forming a carbonaceous material powder mixture.

Next, 88 parts by weight of the resulting carbonaceous material powder mixture, 6 parts by weight of the unsaturated polyurethane compound prepared in Synthesis Example 1, 3 parts by weight of methoxydiethylene glycol monomethacrylate, 3 parts by weight of the cellulose derivative prepared in Synthesis Example 2, 70 parts by weight of N-methyl-2-pyrrolidone and 0.1 part by weight of azobisisobutyronitrile were placed in a mixing container and subjected to three sets of wet mixing and defoaming operations in a planetary mixer (Mazerustar KK-102N, manufactured by Kurabo Industries, Ltd.). Each set of operations consisted of rotating and revolving the mixing container at speeds of rotation and revolution of about 1,000 rpm each for 5 minutes, then at a speed of revolution of about 1,000 rpm and a speed of rotation of about 270 rpm for 1 minute. This process yielded a paste-like polarizable electrode binder composition.

The polarizable electrode binder composition was coated with a doctor blade onto aluminum foil, then dried at 80°C for 2 hours to effect curing, thereby giving a polarizable electrode. Next, the polarizable electrode was roll-pressed, yielding a polarizable electrode having an ultimate thickness of 100 μm and a density of 0.6 g/cm$^3$. A 20 mm diameter disc was cut from the resulting electrode, sandwiched under a pressure of 0.3 MPa between two copper discs having the same diameter of 20 mm, and the AC impedance was measured at a frequency of 1 kHz. The polarizable electrode had an impedance of 110 mΩ.

Example 3

Fabrication of Carbonaceous Material Powder Mixture for Electrical Double-Layer Capacitors, and Polarizable Electrode (3)

Aside from using the polyglycidol derivative from Synthesis Example 3 instead of the cellulose derivative from Synthesis Example 2, a polymerizable electrode binder composition was prepared in exactly the same way as in Example 2, then similarly dried and cured to form a polarizable electrode. The resulting polarizable electrode was roll-pressed, yielding a polarizable electrode having an ultimate thickness of 100 μm and a density of 0.6 g/cm$^3$. A 20 mm diameter disc was cut from the resulting electrode, sandwiched under a pressure of 0.3 MPa between two copper discs having the same diameter of 20 mm, and the AC impedance was measured at a frequency of 1 kHz. The polarizable electrode had an impedance of 120 mΩ.

Example 4

Fabrication of Carbonaceous Material Powder Mixture for Electrical Double-Layer Capacitors, and Polarizable Electrode (4)

Aside from using the polyvinyl alcohol derivative from Synthesis Example 4 instead of the cellulose derivative from Synthesis Example 2, a polymerizable electrode binder composition was prepared in exactly the same way as in Example 2, then similarly dried and cured to form a polarizable electrode. The resulting polarizable electrode was roll-pressed, yielding a polarizable electrode having an ultimate thickness of 100 μm and a density of 0.6 g/cm$^3$. A 20 mm diameter disc was cut from the resulting electrode, sandwiched under a pressure of 0.3 MPa between two copper discs having the same diameter of 20 mm, and the AC impedance was measured at a frequency of 1 kHz. The polarizable electrode had an impedance of 120 mΩ.

Example 5

Fabrication of Carbonaceous Material Powder Mixture for Electrical Double-Layer Capacitors, and Polarizable Electrode (5)

A mixing container was charged with 92 parts by weight of activated carbon (MSP20, produced by Kansai

Netsukagaku K.K.; average particle size, 20 pm) and 8 parts by weight of Ketjen black having an average particle size of 30 nm as the conductive powder. The components were dry mixed in a planetary mixer (Mazerustar KK-102N, manufactured by Kurabo Industries, Ltd.) by rotating and revolving the mixing container and its contents at speeds of rotation and revolution of about 1,000 rpm each for three 5-minute cycles, thereby forming a carbonaceous material powder mixture.

Next, 95 parts by weight of the resulting carbonaceous material powder mixture and 100 parts by weight of an N-methyl-2-pyrrolidone solution in which 5 wt% of the thermoplastic polyurethane resin prepared in Synthesis Example 5 had been dissolved were placed in a mixing container and subjected to three sets of wet mixing and defoaming operations in a planetary mixer (Mazerustar KK-102N, manufactured by Kurabo Industries, Ltd.). Each set of operations consisted of rotating and revolving the mixing container at speeds of rotation and revolution of about 1,000 rpm each for 5 minutes, then at a speed of revolution of about 1,000 rpm and a speed of rotation of about 270 rpm for 1 minute. This process yielded a paste-like polarizable electrode binder composition.

The polarizable electrode binder composition was coated with a doctor blade onto aluminum foil, then dried at 80°C for 2 hours to effect curing, thereby giving a polarizable electrode. Next, the polarizable electrode was roll-pressed, yielding a polarizable electrode having an ultimate thickness of 100 μm and a density of 0.6 g/$cm^3$. A 20 mm diameter disc was cut from the resulting electrode, sandwiched under a pressure of 0.3 MPa between two copper discs having the same diameter of 20 mm, and the AC impedance was measured at a frequency of 1 kHz. The polarizable electrode had an impedance of 50 mΩ.

<u>Example 6</u>

Fabrication of Carbonaceous Material Powder Mixture for Electrical Double-Layer Capacitors, and Polarizable Electrode (6)

Production of Activated Carbon:

Mesophase pitch with a Mettler softening point of 285°C prepared by the heat treatment of residual oil from the cracking of petroleum was melt-blow spun using a spinneret having a row of one thousand 0.2 mm diameter holes in a 2 mm wide slit, thereby producing pitch fibers.

The spun pitch fibers were drawn by suction against the back side of a belt made of 35 mesh stainless steel wire fabric and thereby collected on the belt. The resulting mat of pitch fibers was subjected to infusibilizing treatment in air at an average temperature rise rate of 4°C/min, yielding infusibilized fibers. The infusibilized fibers were then subjected to carbonization treatment in nitrogen at 700°C, following which they were milled to an average particle size of 25 μm in a high-speed rotary mill.

Next, 2 to 4 parts by weight of potassium hydroxide was added to and uniformly mixed with 1 part by weight of the milled carbon fiber, and alkali activation was carried out at 700°C for 2 to 4 hours in a nitrogen atmosphere. The resulting reaction product was cooled to room temperature and placed in isopropyl alcohol, then washed with water to neutrality and dried.

The dried carbonaceous material was ground in a ball mill, thereby yielding activated carbon having a cumulative average particle size of 2.4 μm. In the resulting activated carbon, pores having a radius greater than 10 Å (1 nm) accounted for 70% of the total pore volume and the BET specific surface area was 90 $m^2$/g.

<Fabrication of Polarizable Electrodes>

Aside from using the foregoing activated carbon instead of the activated carbon (MSP20) used in Example 5, a polymerizable electrode binder composition was prepared exactly in exactly the same way as in Example 5, then similarly dried and cured to form a polarizable electrode. The resulting polarizable electrode was roll-pressed, yielding a polarizable electrode having an ultimate thickness of 100 μm and a density of 1.0 g/$cm^3$. A 20 mm diameter disc was cut from the resulting electrode, sandwiched under a pressure of 0.3 MPa between two copper discs having the same diameter of 20 mm, and the AC impedance was measured at a frequency of 1 kHz. The polarizable electrode had an impedance of 25 mΩ. A scanning electron micrograph of this polarizable electrode is shown in FIG. 1.

<u>Example 7</u>

Fabrication of Carbonaceous Material Powder Mixture for Electrical Double-Layer Capacitors, and Polarizable Electrode (7)

Aside from using polyvinylidene fluoride instead of the thermoplastic polyurethane resin from Synthesis Example 5, a polymerizable electrode binder composition was prepared in exactly the same way as in Example 6, then similarly

dried and cured to form a polarizable electrode. The resulting polarizable electrode was roll-pressed, yielding a polarizable electrode having an ultimate thickness of 100 μm and a density of 1.0 g/cm$^3$ . A 20 mm diameter disc was cut from the resulting electrode, sandwiched under a pressure of 0.3 MPa between two copper discs having the same diameter of 20 mm, and the AC impedance was measured at a frequency of 1 kHz. The polarizable electrode had an impedance of 30 mΩ.

Comparative Example 1

Fabrication of Carbonaceous Material Powder Mixture for Electrical Double-Layer Capacitors, and Polarizable Electrode (8)

Aside from using a propeller mixer instead of the planetary mixer used in Example 6 and mixing at 200 rpm for 2 hours, a polarizable electrode binder composition was prepared in exactly the same way as in Example 6, then similarly dried to form a positive electrode. The resulting polarizable electrode was roll-pressed, yielding a positive electrode having an ultimate thickness of 100 μm and a density of 1.0 g/cm$^3$. A 20 mm diameter disc was cut from the resulting electrode, sandwiched under a pressure of 0.3 MPa between two copper discs having the same diameter of 20 mm, and the AC impedance was measured at a frequency of 1 kHz. The positive electrode had an impedance of 600 mΩ. A scanning electron micrograph of this polarizable electrode is shown in FIG. 2.

Example 8

Electrical Double-Layer Capacitor (1)

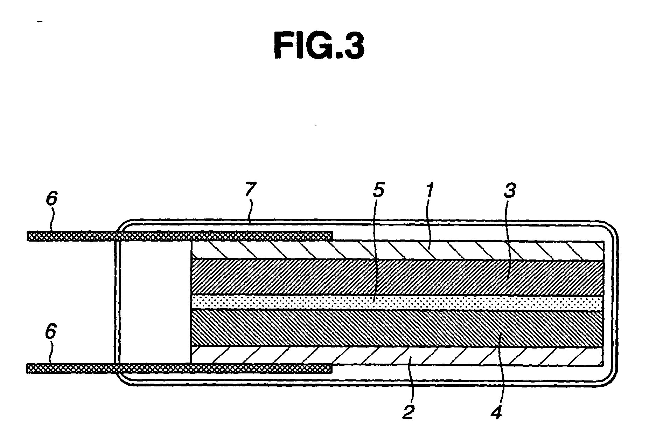

A separator base (polytetrafluoroethylene) was placed between a pair of the polarizable electrodes prepared in Example 6. The resulting cell assembly was inserted in an aluminum laminate outer pack, following which the interior of the laminate pack was evacuated so as to bring the laminate material up tight against the cell assembly. Next, an electrolyte composed of a 1 mol/kg solution of tetraethylammonium tetrafluoroborate in propylene carbonate was introduced into the cell assembly via a needle passing through a hole in the pack. The laminate pack was subsequently sealed, thereby giving a laminate-type electrical double-layer capacitor having the construction shown in FIG. 3.

As described above and demonstrated in the foregoing examples, the invention provides electrical double-layer capacitors which have a high output voltage and a high capacity because of a low impedance.

## Claims

**1.** A carbonaceous material powder mixture for electrical double-layer capacitors, which powder mixture comprises:

a carbonaceous material for electrical double-layer capacitors with an average particle size of 0.1 to 100 μm, and an electrically conductive powder which adheres to the periphery of the carbonaceous material;

wherein the conductive powder has an average particle size that is 10 nm to 10 μm and smaller than the average particle size of the carbonaceous material, wherein the mixture is prepared by placing a carbonaceous material for electrical double-layer capacitors and an electrically conductive powder in a mixing container, then rotating and revolving the container so as to effect dry mixture.

**2.** The powder mixture of claim 1 which is composed of 0.1 to 20 parts by weight of the conductive powder per 100 parts by weight of the carbonaceous material.

**3.** The powder mixture of claim 1 or claim 2, wherein the carbonaceous material has a packing density of not more than 1.0 g/cm$^3$ and an average particle size of 0.1 to 100 μm.

**4.** The powder mixture of any one of claims 1 to 3, wherein the carbonaceous material for electrical double-layer capacitors is prepared by subjecting a mesophase pitch-based carbon material, a polyacrylonitrile-based carbon material, a gas phase-grown carbon material, a rayon-based carbon material or a pitch-based carbon material to alkali activation with an alkali metal compound, then grinding the activated carbon material.

**5.** A polarizable electrode composition prepared by wet mixing the powder mixture of any one of claims 1 to 4 with a binder polymer in a mixing container subjected to rotational and revolutionary motion.

6. The polarizable electrode composition of claim 5, wherein the binder polymer is an unsaturated polyurethane compound prepared by reacting:

(A) an unsaturated alcohol having at least one (meth)acryloyl group and a hydroxyl group on the molecule;
(B) a polyol compound of general formula (1) below

$$HO-[(R^1)_h-(Y)_i-(R^2)_j]_q-OH \qquad (1)$$

wherein $R^1$ and $R^2$ are each independently a divalent hydrocarbon group of 1 to 10 carbons which may contain an amino, nitro, carbonyl or ether group,
Y is -COO-, -OCOO-, $-NR^3CO-$ ($R^3$ being hydrogen or an alkyl group of 1 to 4 carbons), -O- or an arylene group,
the letters h, i and j are each independently 0 or an integer from 1 to 10, and
the letter q is an integer which is ≥1;

(C) a polyisocyanate compound; and
(D) an optional chain extender.

7. The polarizable electrode composition of claim 5, wherein the binder polymer is a polymeric material having an interpenetrating network structure or a semi-interpenetrating network structure.

8. The polarizable electrode composition of claim 7, wherein the polymeric material having an interpenetrating network structure or a semi-interpenetrating network structure comprises a hydroxyalkyl polysaccharide derivative, a polyvinyl alcohol derivative or a polyglycidol derivative in combination with a crosslinkable functional group-bearing compound, part or all of which compound is the unsaturated polyurethane compound of claim 6.

9. The polarizable electrode composition of claim 5, wherein the binder polymer is a thermoplastic resin containing units of general formula (2) below

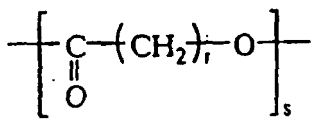

(2)

in which the letter r is 3, 4 or 5, and the letter s is an integer ≥5.

10. The polarizable electrode composition of claim 5, wherein the binder polymer is a fluoropolymer material.

11. A polarizable electrode for electrical double-layer capacitors, which electrode comprises a current collector coated with a polarizable electrode composition according to any one of claims 5 to 10.

12. An electrical double-layer capacitor comprising in part the polarizable electrode of claim 11 and an electrolyte.

13. A method for producing a powder mixture according to any of claims 1-4 comprising a step of placing a carbonaceous material for electrical double-layer capacitors and an electrically conductive powder in a mixing container, then rotating and revolving the container so as to effect dry mixture.

14. A method according to claim 13 including a preliminary step of preparing the carbonaceous material by subjecting a mesophase pitch-based carbon material, a polyacrylonitrile-based carbon material, a gas phase-grown carbon material, a rayon-based carbon material or a pitch-based carbon material to alkali activation with an alkali metal compound, then grinding the activated carbon material.

15. A method of producing a composition according to any of claims 5-10 comprising a step of wet mixing the powder mixture of any of claims 1-4 or as produced by the method of claim 13 or claim 14 with a binder polymer in a mixing container subjected to rotational and revolutionary motion.

## Patentansprüche

1. Pulvergemisch aus kohlenstoffhältigem Material für elektrische Doppelschichtkondensatoren, wobei das Pulvergemisch Folgendes umfasst:

   ein kohlenstoffhältiges Material für elektrische Doppelschichtkondensatoren mit einer mittleren Teilchengröße von 0,1 bis 100 μm und
   ein elektrisch leitendes Pulver, das an der Außenseite des kohlenstoffhältigen Materials haftet;

   worin das leitende Pulver eine mittlere Teilchengröße von 10 nm bis 10 μm aufweist, die kleiner ist als die mittlere Teilchengröße des kohlenstoffhältigen Materials, worin das Gemisch hergestellt ist, indem ein kohlenstoffhältiges Material für elektrische Doppelschichtkondensatoren und ein elektrisch leitendes Pulver in einen Mischbehälter gefüllt werden und der Behälter dann rotiert und gedreht wird, um einen Trockenmischvorgang durchzuführen.

2. Pulvergemisch nach Anspruch 1, das aus 0,1 bis 20 Gewichtsteilen des leitenden Pulvers pro 100 Gewichtsteile des kohlenstoffhältigen Materials besteht.

3. Pulvergemisch nach Anspruch 1 oder Anspruch 2, worin das kohlenstoffhältige Material eine Packungsdichte von nicht mehr als 1,0 g/m$^3$ und eine mittlere Teilchengröße von 0,1 bis 100 μm aufweist.

4. Pulvergemisch nach einem der Ansprüche 1 bis 3, worin das kohlenstoffhältige Material für elektrische Doppelschichtkondensatoren hergestellt ist, indem ein Mesophasen-Kohlenstoffmaterial auf Pechbasis, ein Kohlenstoffmaterial auf Polyacrylnitrilbasis, ein in einer Gasphase gezüchtetes Kohlenstoffmaterial, ein Kohlenstoffmaterial auf Reyonbasis oder ein Kohlenstoffmaterial auf Pechbasis einer Alkaliaktivierung mit einer Alkalimetallverbindung unterzogen wird, wonach das aktivierte Kohlenstoffmaterial gemahlen wird.

5. Polarisierbare Elektrodenzusammensetzung, hergestellt durch Nassvermischen eines Pulvergemischs nach einem der Ansprüche 1 bis 4 mit einem Polymer als Bindemittel in einem Mischbehälter, der dann einer Rotations- und Drehbewegung unterzogen wird.

6. Polarisierbare Elektrodenzusammensetzung nach Anspruch 5, worin das als Bindemittel verwendete Polymer eine ungesättigte Polyurethanverbindung ist, die durch Reaktion

   (A) eines ungesättigten Alkohols mit zumindest einer (Meth)acryloylgruppe und einer Hydroxylgruppe pro Molekül;
   (B) einer Polyolverbindung der nachstehenden allgemeinen Formel (1)

   $$HO\text{-}[(R^1)_h\text{-}(Y)_i\text{-}(R^2)_j]_q\text{-}OH \qquad (1)$$

   worin $R^1$ und $R^2$ jeweils unabhängig voneinander eine zweiwertige Kohlenwasserstoffgruppe mit 1 bis 10 Kohlenstoffatomen sind, die eine Amino-, Nitro-, Carbonyl- oder Ethergruppe enthalten kann,
   Y -COO-, -OCOO-, -NR$^3$CO- (worin $R^3$ Wasserstoff oder eine Alkylgruppe mit 1 bis 4 Kohlenstoffatomen ist), -O- oder eine Arylengruppe ist,
   die Buchstaben h, i und j jeweils unabhängig voneinander 0 oder eine ganze Zahl von 1 bis 10 sind und der Buchstabe q eine ganze Zahl ≥ 1 ist;

   (C) einer Polyisocyanatverbindung und
   (D) gegebenenfalls eines Kettenverlängerers

   hergestellt ist.

7. Polarisierbare Elektrodenzusammensetzung nach Anspruch 5, worin das als Bindemittel verwendete Polymer ein Polymermaterial mit einer interpenetrierenden Netzwerkstruktur oder einer semi-interpenetrierenden Netzwerkstruktur ist.

8. Polarisierbare Elektrodenzusammensetzung nach Anspruch 7, worin das Polymermaterial mit interpenetrierender Netzwerkstruktur oder einer semi-interpenetrierenden Netzwerkstruktur ein Hydroxyalkylpolysaccharid-Derivat, ein

Polyvinylalkohol-Derivat oder ein Polyglycidol-Derivat in Kombination mit einer vernetzbare funktionelle Gruppen aufweisenden Verbindung ist, wobei ein Teil dieser oder die gesamte Verbindung eine ungesättigte Polyurethanverbindung aus Anspruch 6 ist.

**9.** Polarisierbare Elektrodenzusammensetzung nach Anspruch 5, worin das als Bindemittel verwendete Polymer ein thermoplastisches Harz ist, das Einheiten der nachstehenden allgemeinen Formel (2) enthält:

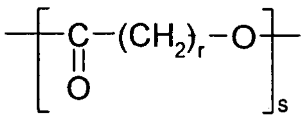

(2)

worin der Buchstabe r = 3, 4 oder 5 ist und der Buchstabe s eine ganze Zahl ≥ 5 ist.

**10.** Polarisierbare Elektrodenzusammensetzung nach Anspruch 5, worin das als Bindemittel verwendete Polymer ein Fluorpolymermaterial ist.

**11.** Polarisierbare Elektrode für elektrische Doppelschichtkondensatoren, wobei die Elektrode einen Stromabnehmer umfasst, der mit einer polarisierbaren Elektrodenzusammensetzung nach einem der Ansprüche 5 bis 10 beschichtet ist.

**12.** Elektrischer Doppelschichtkondensator, der als Bestandteile eine polarisierbare Elektrode nach Anspruch 11 und einen Elektrolyten umfasst.

**13.** Verfahren zur Herstellung eines Pulvergemischs nach einem der Ansprüche 1 bis 4, umfassend einen Schritt des Füllens eines kohlenstoffhältigen Materials für elektrische Doppelschichtkondensatoren und eines elektrisch leitenden Pulvers in einen Mischbehälter und des anschließenden Rotierens und Drehens des Behälters, um einen Trockenmischvorgang durchzuführen.

**14.** Verfahren nach Anspruch 13, umfassend einen vorherigen Schritt des Herstellens des kohlenstoffhältigen Materials durch Unterziehen eines Mesophasen-Kohlenstoffmaterials auf Pechbasis, eines Kohlenstoffmaterial auf Polyacrylnitrilbasis, eines in einer Gasphase gezüchteten Kohlenstoffmaterials, eines Kohlenstoffmaterials auf Reyonbasis oder eines Kohlenstoffmaterials auf Pechbasis einer Alkaliaktivierung mit einer Alkalimetallverbindung und anschließendes Mahlen des aktivierten Kohlenstoffmaterials.

**15.** Verfahren zur Herstellung einer Zusammensetzung nach einem der Ansprüche 5 bis 10, umfassend einen Schritt des Nassvermischens eines Pulvergemischs nach einem der Ansprüche 1 bis 4 oder hergestellt durch ein Verfahren nach Anspruch 13 oder Anspruch 14 mit einem Polymer als Bindemittel in einem Mischbehälter, der dann einer Rotations- und Drehbewegung unterzogen wird.

## Revendications

**1.** Mélange de poudres de matériaux carbonés pour des condensateurs électriques à double couche, lequel mélange de poudres comprend:

une matière carbonée pour des condensateurs électriques à double couche avec une dimension moyenne des particules de 0,1 à 100 μm, et
une poudres électriquement conductrice qui adhère à la périphérie de la matière carbonée;

où la poudres conductrice a une dimension moyenne des particules qui est de 10nm à 10μm et plus petite que la dimension moyenne des particules de la matière carbonée, où le mélange est préparé en plaçant une matière carbonée pour des con densateurs électriques à double couche et une poudres électriquement conductrice dans un conteneur de mélange puis en faisant tourner et subir une rotation au conteneur afin d'effectuer un mélange à sec.

2. Mélange de poudres de la revendication 1 qui se compose de 0,1 à 20 parties en poids de la poudre conductrice pour 100 parties en poids de la matière carbonée.

3. Mélange de poudres de la revendication 1 o u de la revendication 2 où la matière carbonée a une densité de tassement de pas plus de 1,0 g/cm$^3$ et une dimension moyenne des particules de 0,1 à 100 $\mu$m.

4. Mélange de poudres de l'une quelconque des revendications 1 à 3 où la matière carbonée pour des condensateurs électriques double couche est préparée en soumettant un matériau de carbone à base de brai en mésophase, un matériau de carbone à base de polyacrylonitrile, un matériau de carbone à croissance en phase gazeuse, un matériau de carbone à base de rayonne, ou un matériau de carbone à base de brai à une activation alcaline avec un composé d'un métal alcalin puis en broyant le matériau de carbone activé.

5. Composition d'électrode polarisable préparée par mélange en phase mouillée du mélange de poudres de l'une quelconque des revendications 1 à 4 avec un polymère liant dans un conteneur de mélange soumis à un mouvement de rotation et de révolution.

6. Composition d'électrode polarisable de la revendication 5 où le polymère liant est un composé de polyuréthanne insaturé préparé par réaction de:

(A) un alcool insatu ré ayant au moins un groupe (méth)acryloyle et un groupe hydroxyle sur la molécule;
(B) un composé de polyol de la formule générale (1) ci-dessous

$$HO\text{-}[(R^1)_h\text{-}(Y)_i\text{-}(R^2)_j]_q\text{-}OH \qquad (1)$$

où $R^1$ et $R^2$ sont chacun indépendamment un groupe hydrocarbure divalent de 1 à 10 carbones qui peuvent contenir un groupe amino, nitro, carbonyle ou éther,
Y est -COO-, -OCOO-, -$NR^3$CO- ($R^3$ étant hydrogène ou un groupe alkyle de 1 à 4 carbones), -O- ou un groupe arylène,
les lettres h, i et j sont chacune indépendamment 0 ou un entier de 1 à 10, et
la lettre q est un entier qui est $\geq 1$;

(C) un composé de polyisocyanate; et
(D) un extenseur de chaîne facultatif.

7. Composition d'électrode polarisable de la revendication 5, où le polymère liant est un matériau polymérique ayant une structure d'un réseau d'interpénétration ou une structure d'un réseau de semi-interpénétration.

8. Composition d'électrode polarisable de la revendication 7, où le matériau polymérique ayant une structure d'un réseau d'interpénétration ou une structure d'un réseau de semi-interpénétration comprend un dérivé d'hydroxyalkyl polysaccharide, un dérivé d'alcool polyvinylique ou un dérivé de polyglycidol en combinaison avec un composé porteur d'un groupe fonctionnel réticulable, une partie où la totalité dudit composé étant le composé de polyuréthanne insaturé de la revendication 6.

9. Composition d'électrode polarisable de la revendication 5, où le polymère liant est une résine thermoplastique contenant des unités de la formule générale (2) ci-dessous:

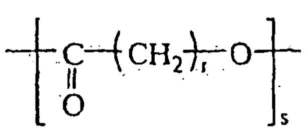

(2)

dans laquelle la lettre r est 3, 4 ou 5 et la lettre s est un entier $\geq 5$.

10. composition d'électrode polarisable de la revendication 5, où le polymère liant est un matériau de polymère fluoré.

11. Electrode polarisable pour des condensateurs électriques double couche, laquelle électrode comprend un collecteur

de courant enduit d' une composition d'électrode polarisable selon l'une quelconque revendication 5 à 10.

**12.** Condensateur électrique double couche comprenant en partie l'électrode polarisable de la revendication 11 et un électrolyte.

**13.** Méthode de production d'un mélange de poudres selon l'une quelconque revendication 1-4, comprenant une étape de placer une matière carbonée pour des condensateurs électriques à double couche et une poudres électriquement conductrice dans un conteneur de mélange puis faire tourner et faire subir une rotation au conteneur afin d'effectuer un mélange à sec.

**14.** Méthode selon la revendication 13 comprenant une étape préliminaire de préparer le matériau carboné en soumettant un matériau de carbone à base de brai en mésophase, un matériau de carbone à base de polyacrylonitrile, un matériau de carbone développé en phase gazeuse, un matériau de carbone à base de rayonne ou un matériau de carbone à base de brai à une activation alcaline avec un composé de métal alcalin puis en broyant le matériau de carbone activé.

**15.** Méthode de production d'une composition selon l'une quelconque revendication 5 -10 comprenant une étape de mélange en phase mouillée du mélange de poudres de l'une quelconque des revendications 1 -4, ou tel que produit par la méthode de la revendication 13 ou de la revendication 14 avec un polymère liant dans un conteneur de mélange soumis à un mouvement de rotation et de révolution.

FIG.1

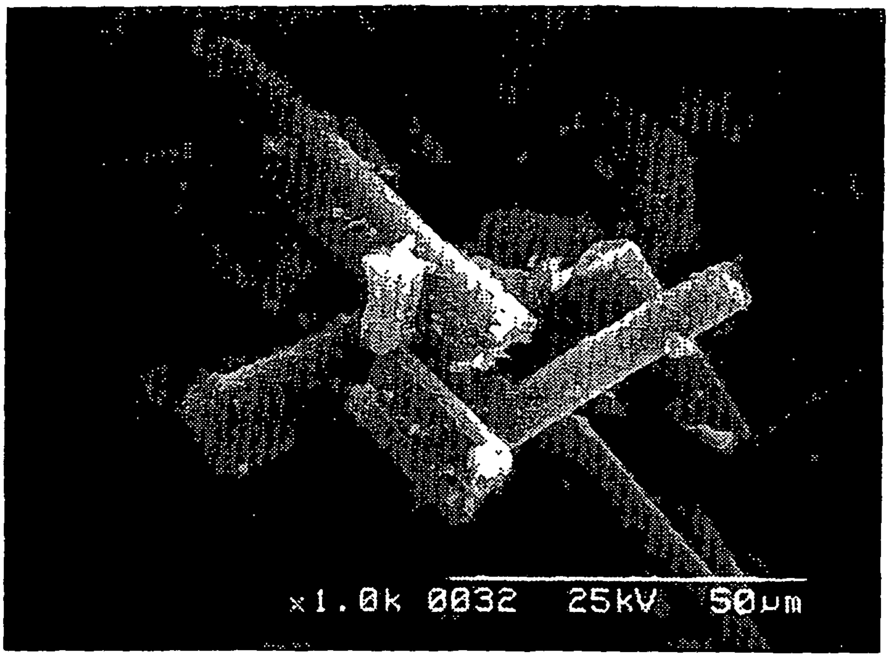


FIG.2

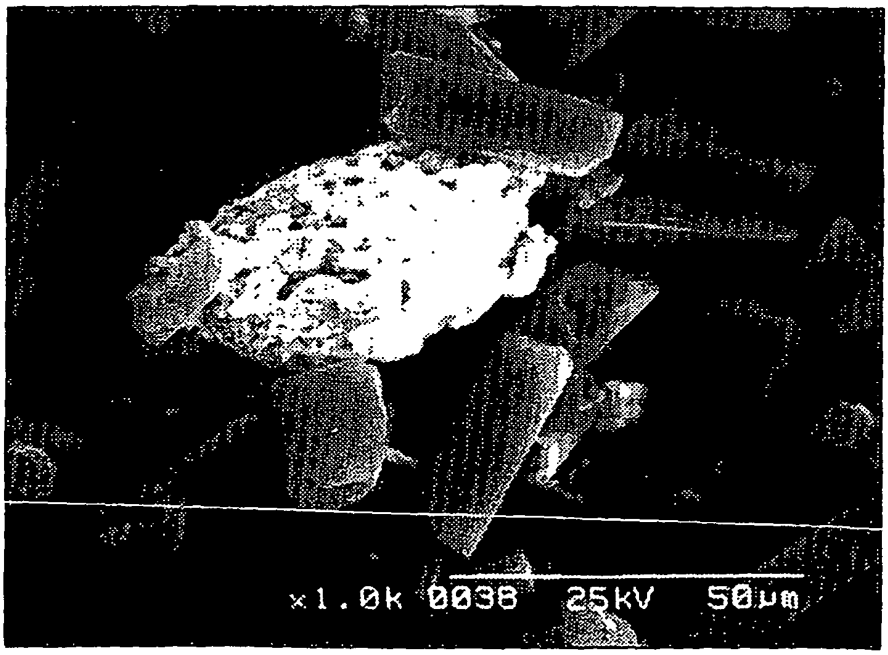

FIG.3